(19) Europäisches Patentamt
European Patent Office
Office européen des brevets

(11) Veröffentlichungsnummer: **0 111 197 B1**

# (12) EUROPÄISCHE PATENTSCHRIFT

(45) Veröffentlichungstag der Patentschrift: **08.11.89**

(51) Int. Cl.⁴: **C 09 B 1/58**, C 09 K 19/00, D 06 P 1/20

(21) Anmeldenummer: **83111602.5**

(22) Anmeldetag: **21.11.83**

(54) **Anthrachinonfarbstoffe, ihre Herstellung und Verwendung sowie dichroitisches Material enthaltend Anthrachinonfarbstoffe.**

(30) Priorität: **03.12.82 DE 3244815**

(43) Veröffentlichungstag der Anmeldung: **20.06.84 Patentblatt 84/25**

(45) Bekanntmachung des Hinweises auf die Patenterteilung: **08.11.89 Patentblatt 89/45**

(84) Benannte Vertragsstaaten: **CH DE GB LI**

(56) Entgegenhaltungen:
**EP-A- 0 056 492**
**EP-A- 0 059 036**
**EP-A- 0 059 095**
**EP-A- 0 093 367**
**DE-A- 2 009 469**
**FR-A- 1 407 683**

(73) Patentinhaber: **BAYER AG, D-5090 Leverkusen 1 Bayerwerk (DE)**

(72) Erfinder: **Blunck, Martin, Dr., Steegerstrasse 7, D-5000 Köln 80 (DE)**
Erfinder: **Claussen, Uwe, Dr., Carl-Rumpff-Strasse 29, D-5090 Leverkusen (DE)**
Erfinder: **Kröck, Friedrich Wilhelm, Dr., Ackerstrasse 45, D-5068 Odenthal (DE)**
Erfinder: **Neeff, Rütger, Dr., Berta-von-Suttner-Strasse 22, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Aus EP-A-0 059 095 und EP-A-0 059 036 ist die Verwendung von

1,5-Dihydroxy-2,6-dinonyl-4-(4-t-butylphenylthio)-8-phenylthioanthrachinon,
1,8-Dihydroxy-2,7-didodecyl-4-phenylthio-5-(4-t-butylphenylthio)-anthrachinon und
1,5-Di-(4-t-butylphenylthio)-4-phenylthioanthrachinon

in flüssigkristallinen Materialien bekannt. EP-A-0 056 492 empfiehlt u.a.

1-Phenylthio-2-(2-benzylthio)-1,2,4-thiadiazol-5-yl-anthrachinon

in Flüssigkristalle enthaltenden optischen Anzeigen. Aus Beispiel 1 der DE-A-2 009 469 ist ein Verfahren zum Färben von Polyethylenglykolterephthalat-Gewebe mit dem Farbstoff der Formel

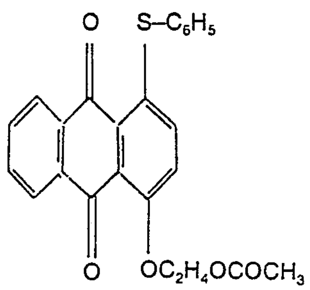

bekannt. Aus FR-A-1 407 683 ist der blaue Polyesterfarbstoff der Formel

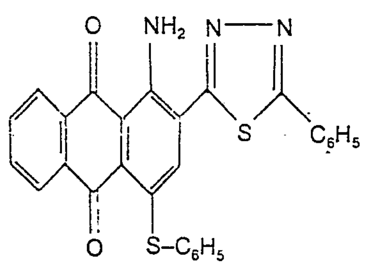

bekannt; die Verwendung dieses Farbstoffs in dichroitischem Material wurde bislang nicht in Erwägung gezogen.

Die Erfindung betrifft neue Anthrachinonfarbstoffe der Formel

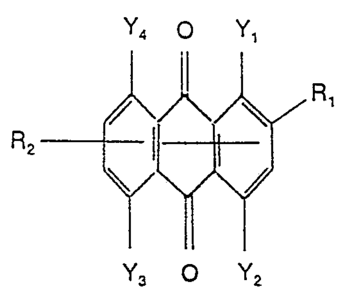 (I),

sowie dichroitisches Material, vorzugsweise in Form flüssigkristalliner Phasen enthaltend Anthrachinonfarbstoffe.

In Formel (I) steht $R_1$ für –CO–X-Alkyl, –CO–X-Aralkyl, –CO–X-Aryl, O-Aryl oder den Rest eines gegebenenfalls substituierten und/oder anellierten 5- oder 6-Ring-Heterocyclus der Oxazol-, Oxdiazol-, Thiazol-, Imidazol-, Triazol-, Oxazolin- oder Dihydro-H-oxazin-Reihe,

$R_2$ für H oder $R_1$, wobei

X für O, S, NH oder eine direkte Bindung steht, und

$Y_1$, $Y_2$, $Y_3$, $Y_4$ für Wasserstoff, $NH_2$, OH, Hal, $NO_2$ oder eine Arylmercaptogruppe stehen und mindestens einer der Substituenten $Y_1$ bis $Y_4$ die Arylmercaptogruppe bezeichnet. Die für $R_1$ sowie $Y_1$ bis $Y_4$ genannten Alkyl-, Aralkyl-, Aryl- und heterocyclischen Reste können substituiert sein und die Alkylketten durch 1 bis 3 nicht nachbarständige Sauerstoffatome unterbrochen sein.

In einem weiteren Aspekt betrifft die Erfindung die in Anspruch 2 genannten Anthrachinonfarbstoffe.

Insbesondere stehen $Y_1$, $Y_2$, $Y_3$ und $Y_4$ für folgende Viererkombinationen:

Tabelle 1

| $Y_1$ | $Y_2$ | $Y_3$ | $Y_4$ |
|---|---|---|---|
| S–Ar | S–Ar | S–Ar | $NH_2$ |
| S–Ar | S–Ar | $NH_2$ | S–Ar |
| S–Ar | $NH_2$ | S–Ar | S–Ar |
| $NH_2$ | S–Ar | S–Ar | S–Ar |
| S–Ar | S–Ar | S–Ar | H |
| S–Ar | S–Ar | H | S–Ar |
| S–Ar | H | S–Ar | S–Ar |
| H | S–Ar | S–Ar | S–Ar |
| S–Ar | S–Ar | $NH_2$ | $NH_2$ |
| $NH_2$ | $NH_2$ | S–Ar | S–Ar |
| S–Ar | $NH_2$ | $NH_2$ | S–Ar |
| $NH_2$ | S–Ar | S–Ar | $NH_2$ |
| S–Ar | $NH_2$ | S–Ar | $NH_2$ |
| $NH_2$ | S–Ar | $NH_2$ | S–Ar |
| S–Ar | S–Ar | $NH_2$ | OH |
| S–Ar | S–Ar | OH | $NH_2$ |
| $NH_2$ | OH | S–Ar | S–Ar |
| OH | $NH_2$ | S–Ar | S–Ar |
| S–Ar | $NH_2$ | S–Ar | OH |
| $NH_2$ | S–Ar | OH | S–Ar |
| S–Ar | OH | S–Ar | $NH_2$ |
| OH | S–Ar | $NH_2$ | S–Ar |
| S–Ar | S–Ar | $NH_2$ | Hal |
| S–Ar | S–Ar | Hal | $NH_2$ |
| $NH_2$ | Hal | S–Ar | S–Ar |
| Hal | $NH_2$ | S–Ar | S–Ar |
| S–Ar | $NH_2$ | S–Ar | Hal |
| $NH_2$ | S–Ar | Hal | S–Ar |
| S–Ar | Hal | S–Ar | $NH_2$ |
| Hal | S–Ar | $NH_2$ | S–Ar |
| S–Ar | S–Ar | $NH_2$ | H |
| S–Ar | S–Ar | H | $NH_2$ |
| $NH_2$ | H | S–Ar | S–Ar |
| H | $NH_2$ | S–Ar | S–Ar |
| S–Ar | $NH_2$ | S–Ar | H |
| $NH_2$ | S–Ar | H | S–Ar |
| S–Ar | H | S–Ar | $NH_2$ |
| H | S–Ar | $NH_2$ | S–Ar |
| S–Ar | OH | S–Ar | OH |
| OH | S–Ar | OH | S–Ar |

Tabelle 1 (Fortsetzung)

| $Y_1$ | $Y_2$ | $Y_3$ | $Y_4$ |
|---|---|---|---|
| S–Ar | OH | S–Ar | Hal |
| OH | S–Ar | Hal | S–Ar |
| S–Ar | Hal | S–Ar | OH |
| Hal | S–Ar | OH | S–Ar |
| S–Ar | S–Ar | OH | H |
| S–Ar | S–Ar | H | OH |
| OH | H | S–Ar | S–Ar |
| H | OH | S–Ar | S–Ar |
| S–Ar | OH | S–Ar | H |
| OH | S–Ar | H | S–Ar |
| S–Ar | H | S–Ar | OH |
| H | S–Ar | OH | S–Ar |
| S–Ar | Hal | S–Ar | H |
| Hal | S–Ar | H | S–Ar |
| S–Ar | H | S–Ar | Hal |
| H | S–Ar | Hal | S–Ar |
| S–Ar | S–Ar | H | H |
| H | H | S–Ar | S–Ar |
| S–Ar | H | S–Ar | H |
| H | S–Ar | H | S–Ar |
| S–Ar | $NH_2$ | $NH_2$ | $NH_2$ |
| $NH_2$ | S–Ar | $NH_2$ | $NH_2$ |
| $NH_2$ | $NH_2$ | S–Ar | $NH_2$ |
| $NH_2$ | $NH_2$ | $NH_2$ | S–Ar |
| S–Ar | $NH_2$ | $NH_2$ | OH |
| $NH_2$ | S–Ar | OH | $NH_2$ |
| $NH_2$ | OH | S–Ar | $NH_2$ |
| OH | $NH_2$ | $NH_2$ | S–Ar |
| S–Ar | OH | $NH_2$ | $NH_2$ |
| OH | S–Ar | $NH_2$ | $NH_2$ |
| $NH_2$ | $NH_2$ | S–Ar | OH |
| $NH_2$ | $NH_2$ | OH | S–Ar |
| S–Ar | $NH_2$ | OH | $NH_2$ |
| $NH_2$ | S–Ar | $NH_2$ | OH |
| OH | $NH_2$ | S–Ar | $NH_2$ |
| $NH_2$ | OH | $NH_2$ | S–Ar |
| S–Ar | $NH_2$ | $NO_2$ | $NH_2$ |
| $NH_2$ | S–Ar | $NH_2$ | $NO_2$ |
| $NO_2$ | $NH_2$ | S–Ar | $NH_2$ |
| $NH_2$ | $NO_2$ | $NH_2$ | S–Ar |
| S–Ar | $NH_2$ | $NH_2$ | H |
| $NH_2$ | S–Ar | H | $NH_2$ |
| $NH_2$ | H | S–Ar | $NH_2$ |
| H | $NH_2$ | $NH_2$ | S–Ar |
| S–Ar | H | $NH_2$ | $NH_2$ |
| H | S–Ar | $NH_2$ | $NH_2$ |
| $NH_2$ | $NH_2$ | S–Ar | H |
| $NH_2$ | $NH_2$ | H | S–Ar |
| S–Ar | $NH_2$ | H | $NH_2$ |
| $NH_2$ | S–Ar | $NH_2$ | H |
| H | $NH_2$ | S–Ar | $NH_2$ |
| $NH_2$ | H | $NH_2$ | S–Ar |
| S–Ar | $NH_2$ | H | H |
| $NH_2$ | S–Ar | H | H |
| H | H | S–Ar | $NH_2$ |
| H | H | $NH_2$ | S–Ar |
| S–Ar | H | $NH_2$ | H |
| H | S–Ar | H | $NH_2$ |
| $NH_2$ | H | S–Ar | H |
| H | $NH_2$ | H | S–Ar |

In der Tabelle 1 bedeuten Ar = Aryl und Hal = Halogen.

Als Substituenten für die Arylreste kommen insbesondere Alkyl, wie $C_1$–$C_7$-Alkyl, Cycloalkyl, wie $C_3$–$C_7$-Cycloalkyl, Aralkyl, wie $C_1$–$C_4$-Alkyl-aryl, Trifluormethyl, Aryl, Halogen, wie Fluor, Chlor, Brom, Alkoxy, wie $C_1$–$C_6$-Alkoxy, Aryloxy wie Phenoxy und Napthyloxy oder –COOT in Frage, wobei T einen organischen Rest bezeichnet.

Geeignete Arylreste sind z.B. Phenyl, Diphenyl, Naphthyl, Indanyl, Tetrahydronaphthyl; bevorzugt ist Phenyl. Bevorzugte Substituenten der Arylreste sind $C_1$–$C_7$-Alkyl, insbesondere Methyl und tert.-Butyl, Halogen, insbesondere Cl und F, Phenyl sowie –COOT.

Alkyl bezeichnet vorzugsweise $C_1$–$C_7$-Alkyl und kann gegebenenfalls durch Halogen, wie Fluor oder Chlor, $C_1$–$C_4$-Alkoxy, Hydroxy, Cycloalkyl, insbesondere Cyclopentyl und Cyclohexyl, oder die Cyanogruppe substituiert und/oder gegebenenfalls in der C-Kette durch ein oder mehrere O- und/oder S-Atome unterbrochen sein.

Aralkyl bezeichnet insbesondere einen $C_1$–$C_4$-Alkyl-arylrest, wobei der Arylrest gegebenenfalls wie zuvor für Aryl beschrieben substituiert sein kann.

Heterocyclische Reste sind insbesondere gegebenenfalls substituierte und/oder anellierte Ringe tragende 5- oder 6-Ring-Heterocyclen der Oxazol-, Oxdiazol-, Thiazol-, Thiadiazol-, Imidazol-, Triazol-, Oxazolin- oder Dihydro-H-oxazin-Reihe.

T steht für einen $C_1$–$C_8$-Alkylrest, dessen C-Kette durch O und/oder S unterbrochen sein kann, und der durch Halogen, Hydroxy, $C_1$–$C_4$-Alkoxy, Cyclopentyl, Cyclohexyl, gegebenenfalls substituiertes Phenyl substituiert sein kann oder für gegebenenfalls substituiertes Phenyl.

Im Rahmen der vorliegenden Erfindung besonders wichtig sind die Verbindungen der Formel (I), bei denen mindestens einer der Substituenten $Y_1$, $Y_2$, $Y_3$, $Y_4$ für $NH_2$ und/oder OH und zusätzlich mindestens einen für –S-Aryl steht und die gegebenenfalls verbleibenden Substituenten $Y_1$, $Y_2$, $Y_3$, $Y_4$ Wasserstoff bedeuten.

Von besonderem Interesse sind weiterhin Farbstoffe der Formel I, bei denen 1–3 der Substituenten $Y_1$, $Y_2$, $Y_3$, $Y_4$ für $-NH_2$ und/oder –OH und zusätzlich 3–1 der Substituenten $Y_1$, $Y_2$, $Y_3$, $Y_4$ für gegebenenfalls substituiertes Arylmercapto stehen.

Besonders wichtig sind weiterhin Verbindungen der Formeln

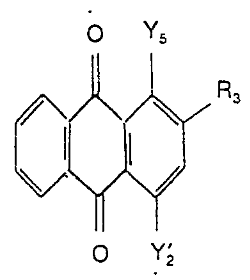

(II)

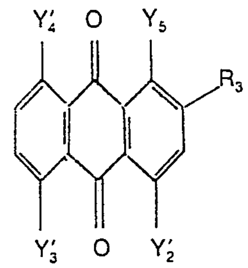

(III)

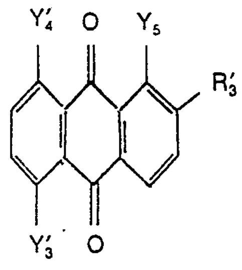

(IV)

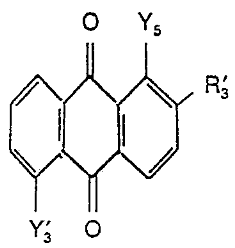

(V)

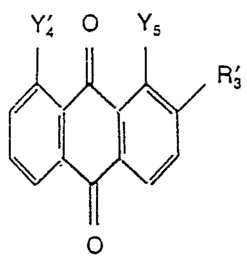

(VI)

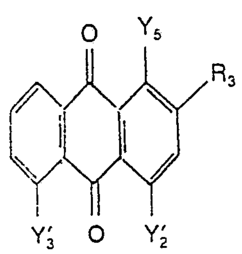

(VII)

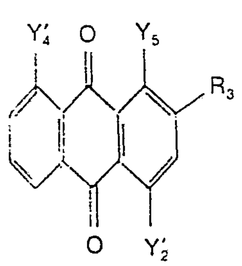

(VIII)

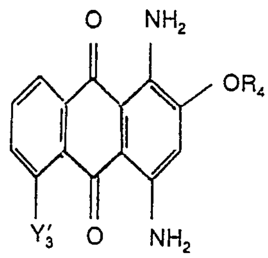

(IX)

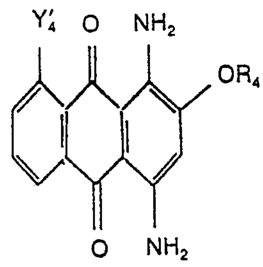

(X)

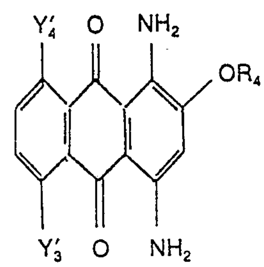

(XI)

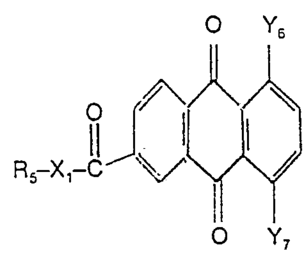

(XII)

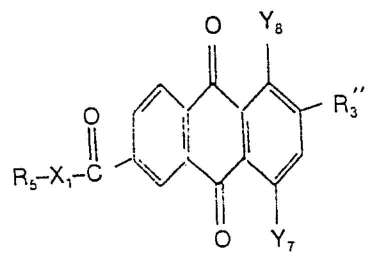

(XIII)

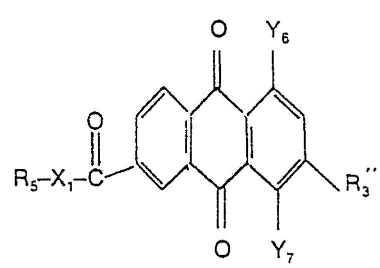

(XIV)

Den einzelnen Substituenten in den Formeln II–XIV kommen folgende Bedeutungen zu:

$Y_5$ $-NH_2$, $-OH$, gegebenenfalls substituiertes Arylmercapto;

$Y'_2$, $Y'_3$, $Y'_4$ gegebenenfalls substituiertes Arylmercapto;

$X_1$ $-O-$, $-S-$, 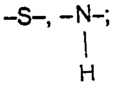

$R_4$, $R_5$ gegebenenfalls substituiertes Alkyl, das in der C-Kette durch ein oder mehrere O- und/oder S-Atome unterbrochen sein kann, gegebenenfalls substituiertes Aryl;

$R_3$ 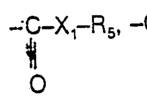 , $-OR_4$, $-SR_4$;

$R'_3$ 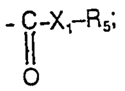

$R''_3$ $-OR_4$, $-SR_4$;

$Y_6$, $Y_7$ $-NH_2$, $-OH$, $-SR_4$, wobei einer der beiden Reste $Y_6$, $Y_7$ gegebenenfalls substituiertes Arylmercapto sein muß.

Die Herstellung der Verbindungen der Formel (I) erfolgt nach an sich bekannten Verfahren, wie sie z.B. in Houben-Weyl, Methoden der organischen Chemie, 4. Aufl., 1979, G. Thieme Verlag, Stuttgart, Band 7/3c beschrieben sind.

Die Einführung des Arylmercaptorestes erfolgt durch Umsetzung eines entsprechenden Halogen- oder Nitro-anthrachinons oder der entsprechenden Anthrachinonsulfonsäure mit einem entsprechenden Thiophenol in einem organischen Lösungsmittel, z.B. in einem Alkohol, in Dimethylformamid, Dimethylsulfoxid oder N-Methylpyrrolidon oder bei der Umsetzung einer Anthrachinonsulfonsäure auch in Wasser, in Gegenwart von säurebindenden Mitteln wie Alkali- oder Erdalkalimetallcarbonaten, -hydroxiden, -oxiden oder -acetaten oder in Gegenwart von organischen säurebindenden Mitteln wie Triethylamin. Dabei reagieren Nitrogruppen bei geeigneten Reaktionsbedingungen häufig bevorzugt, so daß sich bei manchen Nitro-halogenanthrachinonen die Reaktion so führen läßt, daß nur die Nitrogruppen ausgetauscht werden.

Die Aminogruppen werden in bekannter Weise entweder durch Reduktion einer Nitrogruppe oder durch Tosylamidschmelze eines entsprechenden Halogenanthrachinons mit nachfolgender Spaltung eingeführt. In Dinitroanthrachinonen wie in 1,5-Dinitro-4,8-dihydroxy-anthrachinon lassen sich die Nitrogruppen häufig stufenweise austauschen oder reduzieren, so daß die verbleibende Nitrogruppe weiteren Reaktionen zugänglich ist.

Die Verbindungen fallen im allgemeinen in ungenügender Reinheit für ihre Verwendung in Flüssigkristallzusammensetzungen an, so daß zusätzliche Reinigungsmaßnahmen wie Umkristallisieren, Säulenchromatographie oder eine Flüssig-Flüssig-Verteilung notwendig werden.

Die Erfindung betrifft weiterhin dichroitisches Material, vorzugsweise in Form flüssigkristalliner Phasen enthaltend mindestens einen Farbstoff der Formel (I) bis (XIV) oder einen Farbstoff gemäß Anspruch 2. In einem weiteren Aspekt betrifft die Erfindung dichroitisches Material gemäß Anspruch 9. Die Flüssigkristallzusammensetzungen finden vorzugsweise in optoelektronischen Anzeigeelementen Verwendung.

Die erfindungsgemäß verwendeten Farbstoffe besitzen eine ausgezeichnete Lichtechtheit, einen hohen Ordnungsgrad und in überwiegendem Maße eine für die technische Verwendung ausreichend hohe Farbdichte in flüssigkristallinen Materialien. Die genannten Eigenschaften sind für die Eignung als Farbstoffe in optoelektronischen Anzeigeelementen, die nach dem guest-host-Prinzip arbeiten, von entscheidender Bedeutung (DE-OS 3 028 593).

Opto-elektronische Anzeigeelemente bestehen in der Regel aus zwei parallel (im Abstand von 5–50 µ) angeordneten Glasplatten. An deren Innenseiten werden Elektroden angebracht, zwischen denen das flüssigkristalline Material eingebettet wird. Die Funktionsfähigkeit einer optoelektronischen Anzeige beruht auf der orientierten Struktur der Flüssigkristalle, die sich durch das angelegte elektrische Feld verändern läßt.

Die orientierte Struktur der flüssigkristallinen Materialien kann sich geeigneten Farbstoffen mitteilen, so daß diese als «Gäste» an der Struktur teilnehmen.

Die erfindungsgemäßen Farbstoffe werden in guest-host-Anzeigen, deren Aufbau und Arbeitsweise bekannt ist (Heilmeyer et al., Mol. Crystals and Liquid Cryst. 8, 293–309 (1969), DE-OS 2 639 675, DE-OS 2 568 568), als Lösung in einer nematischen Flüssigkristallmischung verwendet. Das flüssigkristalline Material als Wirtsphase enthält wenigstens einen Farbstoff der Formel (I) und kann daneben weitere Farbstoffe enthalten. Diese können dichroitische Eigenschaften besitzen oder nicht.

Die Lösung besteht aus etwa 0,01 bis etwa 30 Gew.-%, vorzugsweise etwa 0,1 bis etwa 10 Gew.-% Farbstoff (als Gast) und aus der Wirtsphase, die überwiegend aus nematischem flüssigkristallinem Material besteht und weitere Zusätze, beispielsweise zur cholesterinischen Orientierung enthalten kann.

Die Erfindung betrifft demnach weiterhin flüssigkristalline Materialien, welche Anthrachinonfarbstoffe der Formeln (I) bis (XIV) oder die in Anspruch 9 genannten Anthrachinonfarbstoffe enthalten. Das flüssigkristalline Material hat vorzugsweise positive dielektrische Anisotropie und kann in optoelektronischen Anzeigevorrichtungen eingesetzt werden.

Von den verschiedenen Ordnungszuständen flüssigkristalliner Materialien sind die nematischen und cholesterinischen bevorzugt, entsprechend den Definitionen, wie sie beispielsweise bei R. Steinsträßer und L. Pohl, Angew. Chem. 85, 706 (1973) angegeben sind.

Im feldlosen Zustand kann man zwei Orientierungen des flüssigkristallinen Materials unterscheiden, die von der Eigenschaft der Phasengrenze und damit von der Vorbehandlung der Glasplatten abhängen. Je nachdem, ob die lange Achse der Moleküle, aus denen die flüssigkristalline Phase besteht, senkrecht oder waagerecht zur Plattenoberfläche gerichtet ist, spricht man von homöotroper oder homogener Textur. Die Herstellungstechniken zur Erzeugung geeigneter Oberflächen sind bekannt (Ullmann, 4. Aufl., (1976), Band XI, S. 657 ff). Von den Dipoleigenschaften der flüssigkristallinen Verbindungen ist die dielektrische Anisotropie abhängig. Sie ist positiv, wenn das elektrische Feld eine homöotrope Ausrichtung bewirkt, negativ, wenn sie homogen wird. Die Verwendung der erfindungsgemäßen Farbstoffe in flüssigkristallinen Materialien mit positiver dielektrischer Anisotropie ist bevorzugt. Als flüssigkristalline Materialien geeignet sind beispielsweise Mischungen, die überwiegend 4-Cyano-biphenyle enthalten. Ein Beispiel ist die Mischung E 7 der Fa. BDH-Chemicals Ltd. (GB), oder solche, die überwiegend 1-(4-Cyanophenyl)-4-alkyl-cyclohexane enthalten. Ein Beispiel hierfür ist die Mischung ZLI 1132 der Fa. Merck (Darmstadt). Weiterhin geeignet sind Mischungen der vorgenannten Stoffklassen mit (4-Cyanophenyl)-pyrimidinen, beispielsweise die Mischung ROTN 30 der Fa. F. Hoffmann-La Roche.

Als weitere Beispiele für käufliche und geeignete Flüssigkristallmischungen sind für eine positive DK-Anisotropie Produkte auf Cyanopyrimidin- und Cyanoester-Basis, sowie Mischungen aus BCH, PCH und PCH-Ester und PCH, BCH, BCH-Ester und Terphenyl (z. B. «ROTN 402», «ROTN 103», «Merck 1221 TNC», «Merck 1291 TNC», «Merck 1691», «Merck 1840» zu nennen.

Daneben aber können eine große Zahl anderer Komponenten eingesetzt werden, wobei in aller Regel Mischungen in Frage kommen, die den genannten Bestandteil enthalten. Insbesondere geeignet sind Verbindungen der folgenden Stoffklassen:

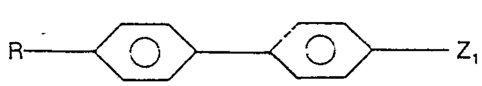

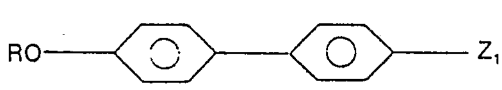

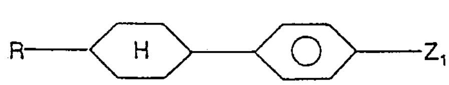

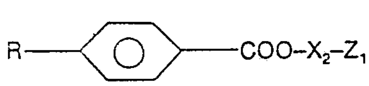

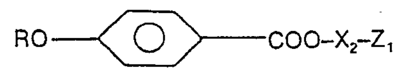

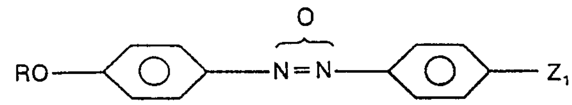

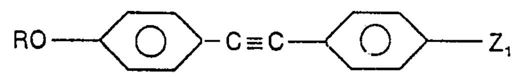

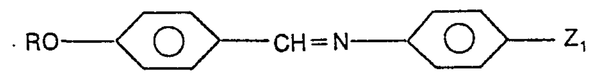

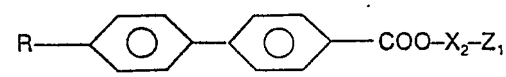

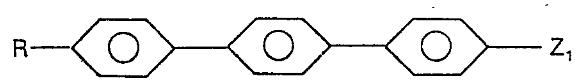

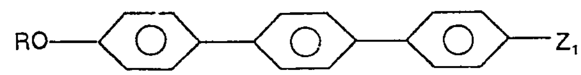

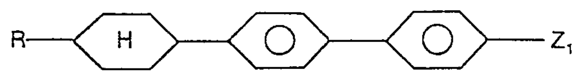

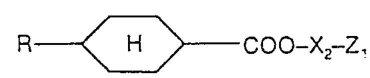

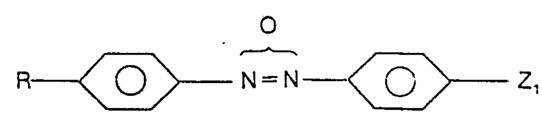

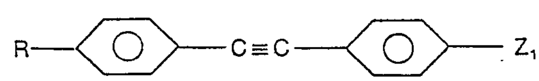

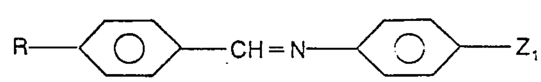

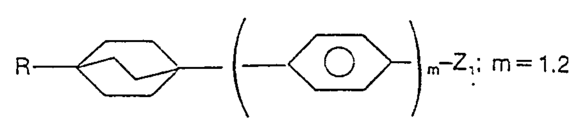

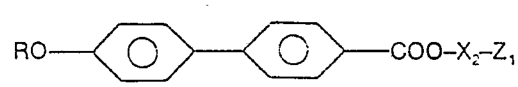

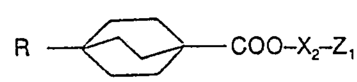

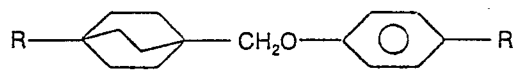

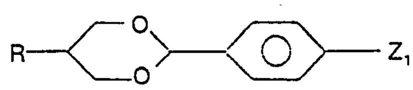

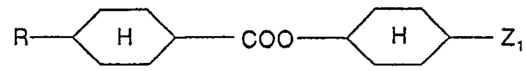

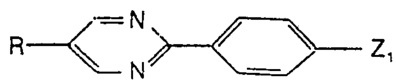

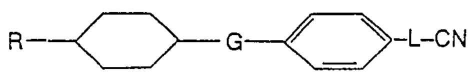

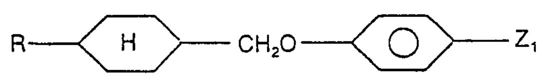

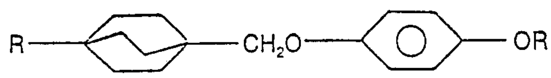

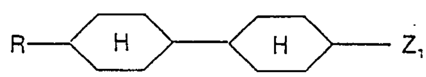

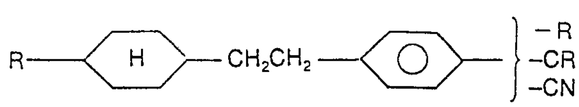

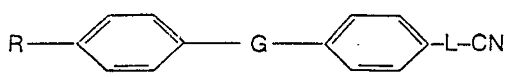

Jeder der enthaltenen Benzolringe kann durch einen oder mehrere Substituenten, z.B. Fluor, substituiert sein. Dabei sind

R eine Alkylgruppe,

ein trans-1,4-substituierter Cyclohexan-Ring,

ein 1,4-substituierter Bicyclo[2,2,2]-octan-Ring,

$X_2$ eine 1,4-Phenylen-, 4,4'-Biphenylen- oder 2,6-Naphthylen-Gruppe,

$Z_1$ CN, R', OR', $CO-O-X_2-Z_2$,

$Z_2$ CN, R' oder OR' und

G, L $-CH_2CH_2-$, $-CH=CH-$, $-C\equiv C-$.

R' hat dieselbe Bedeutung wie R.

Neben den flüssigkristallinen Verbindungen und dem Farbstoff kann das flüssigkristalline Material weitere übliche Zusätze enthalten, z.B. optisch aktive Verbindungen, die eine nematische Phase in eine cholesterinische umwandeln können oder Substanzen zur Verminderung der Schwellspannung usw.

Die Güte der guest-host-Wechselwirkung ist durch die mittlere Abweichung der geometrischen Achse der Farbstoffmoleküle von der durch die Moleküle des flüssigkristallinen Materials vorgegebenen Vorzugsrichtung angebbar. Man kann einen Ordnungsgrad S definieren, der die mittlere Abweichung berücksichtigt und bei vollkommener Ordnung den Wert 1,0 annimmt. Praktisch wird dieser Wert nicht erreicht, vielmehr sind die S-Werte <1,0. Die in der Literatur angegebenen Werte sind wegen unterschiedlicher Meßtechniken nicht ohne weiteres vergleichbar. Die Definition des Ordnungsgrades und seine Bedeutung ist bei D.L. White und G.N. Taylor, J. Appl. Phys. (5) 1974, 4718–4723 oder beispielsweise in EP-OS 2 104 beschrieben. Die S-Werte einiger der anspruchsgemäßen Verbindungen sind in den Tabellen 2 und 3 aufgeführt.

Für die technische Verwendung sind Farbstoffe mit hohem Ordnungsgrad besonders wertvoll. Jedoch müssen eine Reihe weiterer Eigenschaften vorhanden sein. Die photochemische Stabilität muß sehr gut sein, der Farbton darf im Licht weder verschießen noch ausbleichen. Darüber hinaus wird eine gute chemische Beständigkeit in dem komplex zusammengesetzten flüssigkristallinen Medium verlangt. Schließlich muß der Farbstoff eine hohe Farbdichte zeigen und darf auch bei anhaltend tiefen Temperaturen nicht kristallisieren.

Es ist offensichtlich, daß es nicht viele Stoffe gibt, die die Gesamtheit aller Eigenschaften in zufriedenstellender Weise erfüllen. Eine notwendige Voraussetzung für die Brauchbarkeit der Farbstoffe ist der Dichroismus der Lichtabsorption in Abhängigkeit von der Orientierung der Wirt-Flüssigkristalle.

Es bedeutet eine besondere Schwierigkeit, die Farbstoffe unter Erhalt der dichroitischen Echtheits- und Farbeigenschaften ausreichend löslich zu machen. Gerade zur Optimierung der Löslichkeit sind zahlreiche Versuche notwendig.

In der Literatur sind Anthrachinone schon länger als dichroitische Farbstoffe bekannt, beispielsweise aus den Literaturstellen DE-OS 2 363 219, US-PS 3 864 022, US-PS 3 975 285, DE-OS 2 418 364, DE-OS 2 815 335, DE-OS 2 920 730, DE-OS 3 006 744, DE-OS 2 082 196, EP-A1-2104, EP-A1-49 035 sowie den japanischen Patentanmeldungen 56 112 967, 5 638 376 und 5 610 583.

Die literaturbekannten Verbindungen insgesamt erweisen sich als verbesserungsbedürftig in Bezug auf Ordnungsgrad, Farbdichte, Lichtbeständigkeit und/oder Farborte.

Die erfindungsgemäßen Farbstoffe liefern je nach Substitution gelbe bis blaue Nuancen von guter Lichtechtheit und Farbstärke.

Die erfindungsgemäß einsetzbaren Farbstoffe sind von besonderem Wert zum Aufbau von Schwarzmischungen für Flüssigkristallzusammensetzungen in Kombination mit Anthrachinon- und Azofarbstoffen. Für derartige Kombinationen geeignete Anthrachinonfarbstoffe sind z.B. aus EP-OS 26 004, DE-OS 3 009 940, DE-OS 3 009 974, EP-OS 34 832, DE-OS 2 903 095, DE-OS 3 028 593, DE-OS 3 036 853 und DE-OS 3 038 372 bekannt.

Die erfindungsgemäßen Farbstoffe eignen sich insbesondere auch zum Färben von synthetischen Polymeren, z.B. Fasern oder Kunststoffen auf Polyester-, Polyamid-, Celluloseester-, Polycarbonat-Basis nach an sich üblichen Verfahren.

Im folgenden wird die «Colour Index Hue Indication Chart» (Society of Dyers and Colourists, GB und American Association of Textile Chemists and Colorists, US) mit «CIHIC» abgekürzt.

Beispiel 1

a) 95 g 1-Amino-2-methyl-4-brom-anthrachinon und 41 g trockenes Kaliumcarbonat trägt man in 500 ccm Dimethylformamid ein, versetzt das Gemisch mit 55 g 4-tert.-Butyl-thiophenol, erhitzt in 1 Stunde auf 125 bis 130 °C und hält diese Temperatur so lange, bis nach ca. 3 Stunden die Reaktion beendet ist. Nach Abkühlen auf ca. 70 °C verdünnt man das Reaktionsgemisch mit 500 ccm Methanol und läßt völlig abkühlen. Dann saugt man den auskristallisierten Farbstoff ab, wäscht ihn mit Methanol und heißem Wasser und trocknet bei 60 °C. Man erhält 66 g (entsprechend 54% der Theorie)

1-Amino-2-methyl-4-(4-tert.-butyl-phenylmercapto)-anthrachinon,

das zur Abtrennung eines blauen Nebenproduktes aus Dimethylformamid umkristallisiert wird.

Der Farbton des an Kieselgel adsorbierten Farbstoffs ist ein blaustichiges Rot mit der Indicator Number 10 (CIHIC).

b) In der nematischen Phase, bestehend aus einer Mischung von ca.

24% trans-4-Heptyl-(4-cyano-phenyl)-cyclohexan,
37% trans-4-Pentyl-(4-cyano-phenyl)-cyclohexan,
26% trans-4-Propyl-(4-cyano-phenyl)-cyclohexan
und 12% trans-4-Pentyl-(4′-cyano-biphenylyl)-cyclohexan,

löst man 0,5% des in Beispiel 1a hergestellten Farbstoffes. Man erhält eine blaustichig rot eingefärbte Flüssigkristallmischung, in der der Farbstoff einen Ordnungsgrad S von 0,69 aufweist.

c) In der flüssigkristallinen Phase, bestehend aus

51% 4′-n-Pentyl-4-cyano-biphenyl,
25% 4′-n-Heptyl-4-cyano-biphenyl,
16% 4′-n-Octyl-4-cyano-biphenyl und
8% 4″-n-Pentyl-4-cyano-terphenyl,

löst man 0,5% des in Beispiel 1a hergestellten Farbstoffs. Man erhält eine blaustichig rot eingefärbte Flüssigkristallmischung, in der der Farbstoff einen Ordnungsgrad S von 0,70 aufweist.

Ähnlich gute Ordnungsgrade findet man auch, wenn man andere, z.B. die auf den Seiten 15–19 beschriebenen Flüssigkristallmischungen einsetzt.

Beispiel 2

a) 6,8 g 1-Amino-2-(4,5-dihydro-oxazol-2-yl)-4-nitro-anthrachinon

und 2,7 g trockenes Kaliumcarbonat trägt man in 50 ccm N-Methyl-pyrrolidon ein, versetzt das Gemisch mit 3,7 g 4-tert.-Butyl-thiophenol, erhitzt in 1 Stunde auf 80 °C und hält diese Temperatur so lange, bis das orangerote Ausgangsmaterial völlig umgesetzt ist. Dann verdünnt man das Reaktionsgemisch bei 70 °C mit 50 ccm Methanol und läßt auf Raumtemperatur abkühlen. Der auskristallisierte Farbstoff wird abgesaugt, mit Methanol und heißem Wasser gewaschen und bei 60 °C getrocknet. Man erhält 6,9 g (entsprechend 75% der Theorie)

1-Amino-2-(4,5-dihydro-oxazol-2-yl)-4-(4-tert.-butyl-phenylmercapto)-anthrachinon,

das aus 100 ccm Dimethylformamid umkristallisiert und mit Ethanol gewaschen wird.

Der Farbton des an Kieselgel adsorbierten Farbstoffs ist ein blaustichiges Violett zwischen den Indicator Numbers 12 und 13 (CIHIC).

b) In der 0,5%-igen blaustichig violetten Lösung des vorstehend beschriebenen Farbstoffes in einer der flüssigkristallinen Phasen der Beispiele 1b oder 1c hat der Farbstoff einen Ordnungsgrad S von 0,75. Ähnlich gute Ordnungsgrade findet man auch, wenn man andere, zum Beispiel die auf den Seiten 15–19 beschriebenen Flüssigkristallmischungen einsetzt.

c) Das in Beispiel 2a eingesetzte

1-Amino-2-(4,5-dihydro-oxazol-2-yl)-4-nitro-anthrachinon

kann wie folgt hergestellt werden:

34 g 1-Amino-4-nitro-anthrachinon-2-carbonsäure-N-(2-methoxy-ethyl)-amid,

hergestellt aus dem 1-Amino-4-nitro-anthrachinon-2-carbonsäurechlorid und 2-Methoxyethylamin, trägt man in 400 ccm 100%-ige Schwefelsäure ein und erwärmt die Lösung bis zum vollständigen Ringschluß auf 50 °C. Nach Abkühlen gießt man das Reaktionsgemisch auf 3 kg Eis, saugt ab und wäscht neutral. Die trockene Substanz wiegt 22 g, entsprechend einer Ausbeute von 70% der Theorie. Sie wird aus Dimethylformamid umkristallisiert.

Beispiel 3

a) 14 g 1-Amino-2-(5,6-dihydro-4H-1,3-oxazin-2-yl)-4-nitro-anthrachinon,

5,4 g Kaliumcarbonat, 100 cm N-Methylpyrolidion und 5,9 g 4-Chlor-thiophenol werden wie in Beispiel 2 umgesetzt. Das Reaktionsgemisch wird wie dort beschrieben aufgearbeitet und man erhält 9,2 g

1-Amino-2-(5,6-dihydro-4H-1,3-oxazin-2-yl)-4-(4-chlor-phenylmercapto)-anthrachinon,

entsprechend einer Ausbeute von 51% der Theorie.

Der Farbton des an Kieselgel adsorbierten Farbstoffs ist ein blaustichiges Violett zwischen den Indicator Numbers 12 und 13.

b) Der vorstehend beschriebene Farbstoff besitzt in einer der flüssigkristallinen Phasen der Beispiele 1b oder 1c eine blauviolette Lösungsfarbe und einen Ordnungsgrad S von 0,73.

c) Das in Beispiel 3a eingesetzte

1-Amino-2-(5,6-dihydro-4H-1,3-oxažin-2-yl)-nitro-anthrachinon

kann analog der Vorschrift in Beispiel 2c aus

1-Amino-4-nitro-anthrachinon-2-carbonsäure-N-(3-methoxy-propyl)-amid

hergestellt werden.

Beispiel 4

a) Die Suspension von

11,6 g 1-Amino-4-nitro-anthrachinon-2-carbonsäurephenylester,

hergestellt aus

1-Amino-4-nitro-anthrachinon-2-carbonsäurechlorid

und Phenol, und 4,2 g Kaliumcarbonat (trocken) in 50 ccm N-Methyl-pyrrolidon wird mit 4,1 g 4-Methyl-thiophenol versetzt und bei 80 °C gerührt, bis das Ausgangsmaterial völlig umgesetzt ist. Das Reaktionsgemisch wird bei 40 °C mit 20 ccm Wasser verdünnt. Nach Abkühlen auf Raumtemperatur saugt man die ausgeschiedenen Kristalle ab, wäscht sie mit einer Mischung aus N-Methylpyrrolidon und Wasser und dann mit heißem Wasser und trocknet bei 60 °C. Man erhält 7,2 g (entsprechend 53% der Theorie)

1-Amino-4-(4-methyl-phenylmercapto)-anthrachinon-2-carbonsäurephenylester,

der zur Reinigung aus Dimethylformamid umkristallisiert werden kann.

Der Farbton des an Kieselgel adsorbierten Farbstoffs ist ein blaustichiges Violett zwischen den Indicator Numbers 12 und 13 (CIHIC).

b) Die 0,5%-ige Lösung des vorstehend beschriebenen Farbstoffs in einer der flüssigkristallinen Phasen des Beispiels 1b oder 1c ist blaustichig violett. Für den Farbstoff mißt man einen Ordnungsgrad S = 0,75 bzw. 0,74.

Ähnlich gute Ordnungsgrade findet man auch in anderen, z.B. den auf den Seiten 15–19 beschriebenen Flüssigkristallmischungen.

Beispiel 5

a) In 50 ccm N-Methyl-pyrrolidon trägt man

11,6 g 1-Amino-4-nitro-anthrachinon-2-carbonsäurephenylester,

(vgl. Beispiel 3a), 4,2 g Kaliumcarbonat (trocken) und 4,8 g 4-Chlor-thiophenol ein und erhitzt das Gemisch so lange auf 80 °C, bis das Ausgangsmaterial völlig umgesetzt ist. Dann verdünnt man bei 70 °C mit 50 ccm Methanol und läßt abkühlen. Die ausgeschiedenen Kristalle werden abgesaugt, mit Methanol und heißem Wasser gewaschen und getrocknet. Man erhält 8,3 g, entsprechend 65% der Theorie

1-Amino-4-(4-chlor-phenylmercapto)-anthrachinon-2-carbonsäuremethylester,

der durch Umsetzung des Phenylesters mit dem zur Fällung verwendeten Methanol entstanden ist. Der Farbstoff kann zur Reinigung aus Dimethylformamid umkristallisiert werden.

Der Farbton des an Kieselgel adsorbierten Farbstoffs ist ein blaustichiges Violett zwischen dem Indicator Numbers 12 und 13 (CIHIC).

b) Der vorstehend beschriebene Farbstoff besitzt in einer der flüssigkristallinen Phasen der Beispiele 1b oder 1c eine blaustichig violette Lösungsfarbe und einen Ordnungsgrat S von 0,74.

Beispiel 6

a) In 50 ccm N-Methylpyrrolidon trägt man

7,7 g 1-Amino-4-nitro-anthrachinon-2-carbonsäurepentylester,

hergestellt aus

1-Amino-4-nitro-anthrachinon-2-carbonsäurechlorid

und n-Pentanol, 2,7 g trockenes Kaliumcarbonat und 2,7 g 4-Methyl-thiophenol ein, erhitzt das Gemisch in 1 Stunde auf 125–130 °C und rührt bei dieser Temperatur, bis nach etwa 1,5 Stunden vollständige Umsetzung erreicht ist. Man läßt abkühlen und verdünnt das Reaktionsgemisch bei 40 °C mit 20 ccm Wasser. Nach vollständigem Abkühlen saugt man den ausgefallenen Farbstoff ab und wäscht ihn mit einer Mischung aus N-Methylpyrrolidon und Wasser und dann mit heißem Wasser. Nach dem Trocknen bei 60 °C erhält man

6,7 g 1-Amino-4-(4-methyl-phenylmercapto)-anthrachinon-2-carbonsäure-n-pentylester,

entsprechend einer Ausbeute von 72% der Theorie. Der Farbstoff kann zur Reinigung aus Dimethylformamid umkristallisiert werden.

Der Farbton des an Kieselgel adsorbierten Farbstoffs ist ein blaustichiges Violett zwischen den Indicator Numbers 12 und 13 (CIHIC).

b) In einer der flüssigkristallinen Phasen der Beispiele 1b oder 1c gelöst besitzt der vorstehend beschriebene Farbstoff einen Ordnungsgrad S von 0,74. Die Lösung hat eine blauviolette Farbe.

Beispiel 7

a) Ersetzt man in Beispiel 5 das 4-Methylthiophenol durch 4,9 g 3-Mercapto-benzoesäure-n-pentylester, hergestellt analog der Vorschrift von P.F. Wiley (J. org. Chem. 16 (1951), 812) für den Methyl- und Ethylester, und verfährt ansonsten wie dort beschrieben, so erhält man nach dreistündiger Reaktionsdauer bei 125–130 °C und entsprechender Aufarbeitung

6,1 g 1-Amino-4-(3-pentoxycarbonyl-phenylmercapto)-anthrachinon-2-carbonsäure-n-pentylester,

entsprechend einer Ausbeute von 54% der Theorie.

Der Farbton des an Kieselgel adsorbierten Farbstoffs ist ein blaustichiges Violett zwischen den Indicator Numbers 12 und 13 (CIHIC).

b) Der vorstehend beschriebene Farbstoff färbt eine Flüssigkristallphase, wie sie in den Beispielen 1b oder 1c verwendet wurde, blauviolett an und weist darin einen Ordnungsgrad S von 0,74 auf.

c) Ganz entsprechend wie bei a) beschrieben erhält man aus dem 4-Mercapto-benzoesäuremethylester, der ebenfalls bei P.F. Wiley (J. org. Chem. 16 (1951), 813) beschrieben ist, den man aber auch aus der von S. Smiles und D.C. Harrison (J. chem. Soc. (London) 121 (1922), 2024) hergestellten 4-Mercapto-bezoesäure (vgl. dazu auch die Mitteilung von D. Bramley und N.H. Chamberlain, J. chem. Soc. (London) 1942, 376) synthetisieren kann, den

1-Amino-4-(4-methoxycarbonyl-phenylmercapto)-anthrachinon-2-carbonsäure-n-pentylester,

der in den Flüssigkristallphasen der Beispiele 1b und 1c mit blauvioletter Farbe gut löslich ist und darin einen Ordnungsgrad S von 0,74 besitzt.

Beispiel 8

a) In 50 ccm N-Methyl-pyrrolidon trägt man
7,8 g 1-Amino-4-brom-anthrachinon-2-carbonsäure-n-propylester,
2,7 g trockenes Kaliumcarbonat und 3,7 g 4-tert.-Butyl-thiophenol ein und erhitzt das Gemisch in 1 Stunde auf 125–130 °C. Man rührt bei dieser Temperatur, bis das Ausgangsmaterial umgesetzt ist und verdünnt dann das Reaktionsgemisch bei 40 °C mit 20 ccm Wasser. Nach dem völligen Erkalten saugt man ab und wäscht das Produkt mit einer Mischung aus N-Methyl-pyrrolidon und Wasser und dann mit heißem Wasser und trocknet es bei 60 °C. Man erhält
5,5 g 1-Amino-4-(4-tert.-butyl-phenylmercapto)-anthrachinon-2-carbonsäure-n-propylester,
entsprechend einer Ausbeute von 57% der Theorie.

Der Farbton des an Kieselgel adsorbierten Farbstoffs ist ein blaustichiges Violett zwischen den Indicator Numbers 12 und 13 (CIHIC).

b) Der vorstehend beschriebene Farbstoff färbt eine Flüssigkristallphase, wie sie in den Beispielen 1b oder 1c verwendet wurde, blauviolett an und weist darin einen Ordnungsgrad S von 0,71 auf. Ähnlich gute Ordnungsgrade findet man auch in anderen, z.B. den auf den Seiten 15–19 beschriebenen Flüssigkristallmischungen.

Beispiel 9

a) Ersetzt man in Beispiel 4 das 4-Methyl-thiophenol durch 6,2 g 4-Phenyl-thiophenol, hergestellt aus der literaturbekannten 4-Diphenylsulfonsäure durch Überführung in das Sulfonsäurechlorid und dessen Reduktion nach A.W. Wagner (Chem. Ber. 99, (1966), 375) mit rotem Phosphor und Jod in Eisessig, und verfährt ansonsten wie dort beschrieben, so erhält man nach entsprechender Aufarbeitung
9,5 g 1-Amino-4-(4-diphenylmercapto)-anthrachinon-2-carbonsäure-phenylester
(60% der Theorie), der zur Reinigung aus Dimethylformamid umkristallisiert werden kann.

Der Farbton des an Kieselgel adsorbierten Farbstoffs ist ein blaustichiges Violett zwischen den Indicator Numbers 12 und 13 (CIHIC).

b) Der vorstehend beschriebene Farbstoff besitzt in einer der flüssigkristallinen Phasen der Beispiele 1b oder 1c eine blauviolette Lösungsfarbe und einen Ordnungsgrad S von 0,78.

Beispiel 10

a) 4,5 g 1-Amino-4,5,8-trichlor-anthrachinon-2-carbonsäurephenylester
und 2 g trockenes Kaliumcarbonat trägt man in 100 ccm Dimethylformamid ein, versetzt mit 4 g 4-Methyl-thiophenol, erhitzt dann unter einem schwachen Stickstoffstrom auf 80 °C und hält diese Temperatur bis zum Reaktionsende. Danach verdünnt man das Reaktionsgemisch bei 40 °C mit 40 ccm Wasser, läßt völlig abkühlen, saugt ab und wäscht das Produkt mit einem Gemisch aus Dimethylformamid und Wasser und dann mit Wasser. Nach dem Trocknen bei 60 °C erhält man
4,8 g 1-Amino-4,5,8-tri-(4-methyl-phenylmercapto)-anthrachinon-2-carbonsäure-phenylester,
entsprechend einer Ausbeute von 67% der Theorie.

Der Farbton des an Kieselgel adsorbierten Farbstoffs ist ein rotstichiges Blau zwischen den Indicator Numbers 13 und 14 (CIHIC).

b) Der vorstehend beschriebene Farbstoff färbt eine Flüssigkristallphase, wie sie in den Beispielen 1b oder 1c verwendet wurde, blau an und weist darin einen Ordnungsgrad S von 0,81 auf.

c) Der im Beispiel 10a eingesetzte
1-Amino-4,5,8-trichlor-anthrachinon-2-carbonsäurephenylester
war wie folgt hergestellt worden:

Ein Gemisch aus 60 g Phenol und 4 g trockenem Kaliumcarbonat wird im Vakuum andestilliert, wobei man ca. 20 g Phenol und Wasser abdestilliert. In die kalte Schmelze trägt man
15,6 g 1-Amino-4,5,8-trichlor-anthrachinon-2-carbonsäurechlorid,
hergestellt aus der in DE-AS 1 154 490, Beispiel 15 beschriebenen
1-Amino-4,5,8-trichlor-anthrachinon-2-carbonsäure
und überschüssigem Thionylchlorid, ein und erhitzt anschließend 30 Minuten auf 60 °C. Dann verdünnt man mit 20 ccm Wasser bei etwa 40 °C, läßt völlig abkühlen, saugt ab, wäscht mit Wasser und trocknet. Man erhält 12,2 g des Produkts, entsprechend einer Ausbeute von 68% der Theorie.

d) Ganz entsprechend wie unter a) beschrieben erhält man aus dem nach c) aus Pentanol und
1-Amino-4,5,8-trichlor-anthrachinon-2-carbonsäurechlorid
dargestellten analogen Pentylester den
1-Amino-4,5,8-tri-(4-methyl-phenylmercapto)-anthrachinon-2-carbonsäurepentylester,
der ebenfalls mit rotstichig blauer Farbe in den in Beispiel 1b oder 1c verwendeten Flüssigkristallphasen löslich ist und darin einen Ordnungsgrad von 0,79 besitzt.

Beispiel 11

a) 7,9 g 1-Amino-4-nitro-anthrachinon-2-carbonsäure-N-(n-hexyl)-amid
und 2,7 g trockenes Kaliumcarbonat trägt man in 50 ccm N-Methyl-pyrrolidon ein, versetzt mit 2,7 g 4-Methyl-thiophenol und erhitzt auf 80 °C bis zum Ende der Reaktion. Dann verdünnt man bei 70 °C mit 50 ccm Methanol, läßt abkühlen, saugt ab und wäscht mit Methanol und Wasser. Man erhält 6,0 g
1-Amino-4-(4-methyl-phenylmercapto)-anthrachinon-2-carbonsäure-N-(n-hexyl)-amid,
entsprechend einer Ausbeute von 63% der Theorie.

Der Farbton des an Kieselgel adsorbierten Farbstoffs ist ein Violett zwischen den Indicator Numbers 11 und 12 (CIHIC).

b) Der vorstehend beschriebene Farbstoff färbt eine Flüssigkristallphase, wie sie in den Beispielen 1b oder 1c verwendet wurde, violett an und hat darin einen Ordnungsgrad S von 0,75.

c) Das in Beispiel 11a eingesetzte
1-Amino-4-nitro-anthrachinon-2-carbonsäure-N-(n-hexyl(-amid kann aus der 1-Amino-4-nitro-anthrachinon-2-carbonsäure durch Umsetzen mit überschüssigem Thionylchlorid, Abdestillieren des Thionylchlorids und Umsetzen des Destillationsrückstandes mit n-Hexylamin hergestellt werden.

Beispiel 12

Ganz entsprechend wie in Beispiel 10 beschrieben, kann auch die in Houben-Weyl, Methoden der organischen Chemie, 4. Aufl., 1979, G. Thieme Verlag, Stuttgart, Band 7/3c, S. 261 beschriebene 1,4-Dichlor-anthrachinon-6-carbonsäure über ihr Säurechlorid in den entsprechenden n-Pentylester, Phenylester oder ein Carbonamid, z.B. in das N-(n-Hexyl)-carbonamid überführt werden. Anschließend werden die beiden Chloratome durch Arylmercaptoreste in der beschriebenen Weise ersetzt. Man erhält rote Verbindungen mit folgenden Ordnungsgraden:

a) 1,4-Di-(4-chlor-phenylmercapto)-anthrachinon-6-carbonsäure-n-pentylester, S = 0,76
b) 1,4-Di-phenylmercapto-anthrachinon-6-carbonsäure-phenylester, S = 0,75

c) 1,4-Di-(4-methyl-phenylmercapto)-anthrachinon-6-carbonsäure-N-(n-hexyl-amid, S = 0,78

d) 1,4-Di-(4-methyl-phenylmercapto)-anthrachinon-6-carbonsäure-anilid, S = 0,79.

Weitere Beispiele sind in der folgenden Tabelle 2 aufgeführt. Die Tabelle bezieht sich auf Farbstoffe der Formel

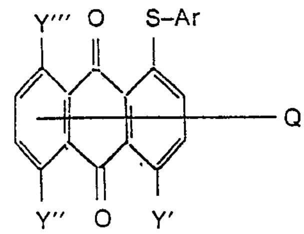

In dieser Formel gibt Q den β-Substituenten an; X in der Tabelle bezeichnet die Stellung, in der Q an den Anthrachinonring gebunden ist, d.h. 2-, 3-, 6- oder 7-Stellung.

In den Spalten $S_1$, $S_2$, $S_3$ und $S_4$ ist der Ordnungsgrad in den nematischen Phasen der Beispiele 1b oder 1c angegeben. Die Daten werden in 0,5%iger Lösung bei einer Schichtdicke von 23 μ gemessen und gemäß dem bekannten Verfahren (z.B. GB-PS 2 071 685) ausgewertet. Die in der Tabelle angegebenen Ordnungsgrade beziehen sich in der Spalte

$S_1$ auf Farbstoffe mit Ar in der Bedeutung Phenyl;

$S_2$ auf Farbstoffe mit Ar in der Bedeutung 4-Chlorphenyl;

$S_3$ auf Farbstoffe mit Ar in der Bedeutung 4-Methylphenyl und

$S_4$ auf Farbstoffe mit Ar in der Bedeutung 4-tert.-Butylphenyl.

In der Rubrik Q steht $C_6H_5$ für Phenyl, $C_6H_4$ für Phenylen, $C_3H_7$ für n-Propyl, $C_4H_9$ für n-Butyl und $C_5H_{11}$ für n-Pentyl.

Die in Klammern gesetzten, gestrichenen Zahlen bezeichnen die Position des nachfolgenden Substituenten am Phenoxy-Rest.

Tabelle 2

| | Y′ | Y″ | Y‴ | X | Q | $S_1$ | $S_2$ | $S_3$ | $S_4$ |
|---|---|---|---|---|---|---|---|---|---|
| 1 | S–Ar | S–Ar | S–Ar | (2) | 2-Oxazolinyl | 0,68 | 0,79 | 0,78 | 0,74 |
| 2 | S–Ar | S–Ar | S–Ar | (2) | $CONHC_6H_5$ | 0,69 | 0,79 | 0,78 | 0,74 |
| 3 | S–Ar | S–Ar | S–Ar | (2) | $COOCH_3$ | 0,66 | 0,77 | 0,76 | 0,72 |
| 4 | S–Ar | S–Ar | S–Ar | (2) | $COOC_3H_7$ | | 0,75 | 0,74 | |
| 5 | S–Ar | S–Ar | S–Ar | (2) | $COOC_5H_{11}$ | | 0,76 | 0,75 | 0,71 |
| 6 | S–Ar | S–Ar | S–Ar | (2) | $COOC_6H_5$ | 0,71 | 0,81 | 0,80 | 0,76 |
| 7 | S–Ar | S–Ar | S–Ar | (2) | $COOC_6H_4(4')CH_3$ | 0,72 | 0,81 | 0,81 | 0,77 |
| 8 | S–Ar | S–Ar | S–Ar | (2) | $COOC_6H_4(4')OCH_3$ | 0,72 | 0,82 | 0,81 | 0,77 |
| 9 | S–Ar | S–Ar | S–Ar | (2) | $COOC_6H_4(4')COOC_5H_1$ | 0,71 | 0,81 | 0,80 | 0,76 |
| 10 | S–Ar | S–Ar | S–Ar | (2) | $COOC_6H_4(4')C_6H_5$ | 0,73 | 0,82 | 0,82 | 0,78 |
| 11 | S–Ar | S–Ar | S–Ar | (2) | $OC_6H_5$ | 0,69 | 0,79 | 0,79 | 0,75 |
| 12 | S–Ar | S–Ar | S–Ar | (2) | $OC_6H_4(2')Cl$ | 0,70 | 0,80 | 0,79 | 0,75 |
| 13 | S–Ar | S–Ar | S–Ar | (2) | $OC_6H_4(3')Cl$ | 0,71 | 0,80 | 0,80 | 0,76 |
| 14 | S–Ar | S–Ar | S–Ar | (2) | $OC_6H_4(3')F$ | 0,70 | 0,80 | 0,79 | 0,75 |
| 15 | S–Ar | S–Ar | S–Ar | (2) | $OC_6H_4(4')CH_3$ | 0,70 | 0,80 | 0,79 | 0,75 |
| 16 | S–Ar | S–Ar | S–Ar | (2) | $OC_6H_4(4')C_6H_5$ | 0,71 | 0,81 | 0,80 | 0,76 |
| 17 | S–Ar | S–Ar | S–Ar | (2) | $OC_6H_4(4')SCH_3$ | 0,69 | 0,79 | 0,79 | 0,75 |
| 18 | S–Ar | S–Ar | S–Ar | (2) | $OC_6H_4(4')COOC_2H_5$ | 0,69 | 0,79 | 0,79 | 0,75 |
| 19 | S–Ar | S–Ar | S–Ar | (2) | $OC_6H_4(4')COOC_5H_{11}$ | 0,69 | 0,79 | 0,78 | 0,74 |
| 20 | S–Ar | S–Ar | S–Ar | (2) | $OC_6H_4(4')Cl$ | 0,69 | 0,79 | 0,78 | 0,74 |
| 21 | S–Ar | S–Ar | S–Ar | (2) | O-2-Naphthyl | | 0,80 | 0,80 | 0,76 |
| 22 | S–Ar | S–Ar | $NH_2$ | (7) | $CH_3$ | 0,69 | 0,77 | 0,76 | 0,73 |
| 23 | S–Ar | S–Ar | $NH_2$ | (7) | 2-Oxazolinyl | | 0,81 | 0,81 | 0,78 |
| 24 | S–Ar | S–Ar | $NH_2$ | (7) | $CONHC_6H_5$ | 0,75 | 0,82 | 0,81 | |
| 25 | S–Ar | S–Ar | $NH_2$ | (7) | $COOC_5H_{11}$ | | 0,79 | | 0,76 |

Tabelle 2 (Fortsetzung)

| | Y′ | Y″ | Y‴ | X | Q | $S_1$ | $S_2$ | $S_3$ | $S_4$ |
|---|---|---|---|---|---|---|---|---|---|
| 26 | S–Ar | S–Ar | $NH_2$ | (7) | $COOC_6H_5$ | 0,77 | 0,82 | | 0,81 |
| 27 | S–Ar | S–Ar | $NH_2$ | (7) | $COOC_6H_4(3')CH_3$ | 0,78 | 0,82 | 0,82 | 0,81 |
| 28 | S–Ar | S–Ar | $NH_2$ | (7) | $COOC_6H_4(4')COOC_5H_{11}$ | 0,77 | 0,82 | 0,82 | 0,80 |
| 29 | S–Ar | S–Ar | $NH_2$ | (7) | $COOC_6H_4(4')C_6H_5$ | 0,79 | 0,83 | 0,82 | 0,82 |
| 30 | S–Ar | S–Ar | $NH_2$ | (7) | $OC_4H_9$ | 0,71 | | 0,78 | 0,75 |
| 31 | S–Ar | S–Ar | $NH_2$ | (7) | $O(CH_2)_2C_6H_5$ | | 0,80 | 0,79 | 0,76 |
| 32 | S–Ar | S–Ar | $NH_2$ | (7) | $OC_6H_5$ | 0,76 | 0,82 | 0,82 | 0,79 |
| 33 | S–Ar | S–Ar | $NH_2$ | (7) | $OC_6H_4(4')OCH_3$ | 0,77 | 0,82 | 0,82 | 0,80 |
| 34 | S–Ar | S–Ar | $NH_2$ | (7) | $OC_6H_4(4')C_6H_5$ | 0,77 | 0,82 | 0,82 | |
| 35 | S–Ar | S–Ar | $NH_2$ | (7) | $OC_6H_4(4')\ COOC_5H_{11}$ | | 0,82 | 0,81 | 0,79 |
| 36 | S–Ar | S–Ar | $NH_2$ | (2) | $CONHC_6H_4(4')CH_3$ | 0,75 | 0,82 | 0,81 | |
| 37 | S–Ar | S–Ar | $NH_2$ | (2) | $COOC_5H_{11}$ | | 0,79 | 0,79 | 0,76 |
| 38 | S–Ar | S–Ar | $NH_2$ | (2) | $COOC_6H_5$ | 0,77 | | 0,82 | 0,81 |
| 39 | S–Ar | S–Ar | $NH_2$ | (2) | $COOC_6H_4(3')CH_3$ | | 0,82 | 0,82 | |
| 40 | S–Ar | S–Ar | $NH_2$ | (2) | $OC_6H_5$ | 0,76 | 0,82 | 0,82 | |
| 41 | S–Ar | S–Ar | $NH_2$ | (2) | $OC_6H_4(3')F$ | | 0,82 | 0,82 | 0,80 |
| 42 | S–Ar | S–Ar | $NH_2$ | (2) | $OC_6H_4(4')COOC_2H_5$ | 0,76 | 0,82 | | |
| 43 | S–Ar | S–Ar | $NH_2$ | (2) | O-2-Naphthyl | | 0,82 | 0,82 | 0,80 |
| 44 | S–Ar | S–Ar | $NH_2$ | (3) | $CH_3$ | | 0,77 | 0,76 | |
| 45 | S–Ar | S–Ar | $NH_2$ | (3) | 2-Oxazolinyl | | 0,81 | | |
| 46 | S–Ar | S–Ar | $NH_2$ | (3) | $CONHC_6H_5$ | 0,75 | 0,82 | 0,81 | 0,79 |
| 47 | S–Ar | S–Ar | $NH_2$ | (3) | $COOC_5H_{11}$ | 0,72 | 0,79 | 0,79 | 0,76 |
| 48 | S–Ar | S–Ar | $NH_2$ | (3) | $COOC_6H_5$ | 0,77 | 0,82 | | 0,81 |
| 49 | S–Ar | S–Ar | $NH_2$ | (3) | $OCH_3$ | 0,69 | 0,77 | 0,76 | |
| 50 | S–Ar | S–Ar | $NH_2$ | (3) | $OC_6H_5$ | 0,76 | 0,82 | | 0,79 |
| 51 | S–Ar | S–Ar | $NH_2$ | (3) | $OC_6H_4(4')COOC_5H_{11}$ | | 0,82 | 0,81 | 0,79 |
| 52 | S–Ar | S–Ar | $NH_2$ | (3) | CN | | 0,77 | | |
| 53 | S–Ar | S–Ar | H | (2) | $CF_3$ | 0,69 | 0,78 | 0,77 | |
| 54 | S–Ar | S–Ar | H | (2) | 2-Oxazolinyl | 0,74 | 0,81 | 0,80 | |
| 55 | S–Ar | S–Ar | H | (2) | $CONHC_6H_4(4')C_6H_5$ | 0,74 | 0,81 | 0,81 | 0,78 |
| 56 | S–Ar | S–Ar | H | (2) | $COOC_5H_{11}$ | | 0,78 | 0,78 | |
| 57 | S–Ar | S–Ar | H | (2) | $COOC_6H_5$ | 0,76 | 0,82 | 0,82 | 0,80 |
| 58 | S–Ar | S–Ar | H | (2) | $COOC_6H_4(4')CH_3$ | 0,77 | 0,82 | 0,82 | 0,80 |
| 59 | S–Ar | S–Ar | H | (2) | $COOC_6H_4(4')Cl$ | | 0,82 | 0,82 | 0,80 |
| 60 | S–Ar | S–Ar | H | (2) | $COOC_6H_4(4')COOC_5H_{11}$ | | 0,82 | 0,82 | 0,80 |
| 61 | S–Ar | S–Ar | H | (2) | $COOC_6H_4(4')C_6H_5$ | 0,78 | 0,82 | 0,82 | 0,81 |
| 62 | S–Ar | S–Ar | H | (2) | $OC_6H_5$ | 0,75 | 0,81 | 0,81 | 0,78 |
| 63 | S–Ar | S–Ar | H | (2) | $OC_6H_4(2')Cl$ | | 0,82 | | |
| 64 | S–Ar | S–Ar | H | (2) | $OC_6H_4(3')CH_3$ | | | 0,81 | |
| 65 | S–Ar | S–Ar | H | (2) | $OC_6H_4(3')F$ | | 0,82 | 0,81 | 0,79 |
| 66 | S–Ar | S–Ar | H | (2) | $OC_6H_4(4')CH_3$ | | 0,82 | 0,81 | 0,79 |
| 67 | S–Ar | S–Ar | H | (2) | $OC_6H_4(4')C_6H_5$ | 0,76 | 0,82 | 0,82 | |
| 68 | S–Ar | S–Ar | H | (2) | $OC_6H_4(4')COOC_2H_5$ | 0,75 | | 0,81 | |
| 69 | S–Ar | S–Ar | H | (2) | $OC_6H_4(4')COOC_5H_{11}$ | | 0,81 | | 0,78 |
| 70 | S–Ar | S–Ar | H | (2) | O 2-Naphthyl | 0,76 | 0,82 | | 0,79 |
| 71 | S–Ar | S–Ar | H | (3) | $CH_2CH(CH_3)_2$ | | 0,81 | | 0,78 |
| 72 | S–Ar | S–Ar | H | (3) | $COOC_5H_{11}$ | 0,71 | | 0,78 | 0,75 |
| 73 | S–Ar | S–Ar | H | (3) | $COOC_6H_5$ | 0,76 | 0,82 | 0,82 | |
| 74 | S–Ar | S–Ar | H | (3) | $COOC_6H_4(4')Cl$ | 0,76 | 0,82 | | 0,80 |
| 75 | S–Ar | S–Ar | H | (3) | $COOC_6H_4(4')COOC_5H_{11}$ | | 0,82 | 0,82 | 0,80 |
| 76 | S–Ar | S–Ar | H | (3) | $COOC_6H_4(4')\ C_6H_5$ | 0,78 | 0,82 | | 0,81 |
| 77 | S–Ar | S–Ar | H | (3) | $OCH_3$ | | 0,76 | 0,75 | |
| 78 | S–Ar | S–Ar | H | (3) | $O(CH_2)_2C_6H_5$ | | 0,79 | 0,78 | 0,75 |
| 79 | S–Ar | S–Ar | H | (3) | $OC_6H_5$ | 0,75 | | 0,81 | |
| 80 | S–Ar | S–Ar | H | (3) | $OC_6H_4(2')Cl$ | | 0,82 | | |
| 81 | S–Ar | S–Ar | H | (3) | $OC_6H_4(3')F$ | 0,75 | 0,82 | 0,81 | |
| 82 | S–Ar | S–Ar | H | (3) | $OC_6H_4(4')CH_3$ | | 0,82 | 0,81 | 0,79 |
| 83 | S–Ar | S–Ar | H | (3) | $OC_6H_4(4')C_6H_5$ | 0,76 | 0,82 | 0,82 | |
| 84 | S–Ar | S–Ar | H | (3) | $OC_6H_4(4')COOC_5H_{11}$ | 0,74 | 0,81 | | 0,78 |
| 85 | S–Ar | S–Ar | H | (3) | $OC_6H_4(4')Cl$ | | 0,81 | 0,81 | 0,78 |
| 86 | S–Ar | S–Ar | H | (6) | 2-Oxazolinyl | | 0,81 | 0,80 | 0,77 |

Tabelle 2 (Fortsetzung)

| | Y′ | Y″ | Y‴ | X | Q | $S_1$ | $S_2$ | $S_3$ | $S_4$ |
|---|---|---|---|---|---|---|---|---|---|
| 87 | S–Ar | S–Ar | H | (6) | $CONHC_6H_4(3')F$ | | 0,81 | 0,81 | 0,78 |
| 88 | S–Ar | S–Ar | H | (6) | $COOC_5H_{11}$ | | 0,78 | | 0,75 |
| 89 | S–Ar | S–Ar | H | (6) | $COOC_6H_5$ | 0,76 | 0,82 | 0,82 | 0,80 |
| 90 | S–Ar | S–Ar | H | (6) | $COOC_6H_4(3')CH_3$ | 0,77 | 0,82 | | 0,80 |
| 91 | S–Ar | S–Ar | H | (6) | $COOC_6H_4(3')COOC_5H_{11}$ | 0,76 | 0,82 | 0,82 | |
| 92 | S–Ar | $NH_2$ | $NH_2$ | (2) | 2-Oxazolinyl | | 0,81 | 0,81 | 0,79 |
| 93 | S–Ar | $NH_2$ | $NH_2$ | (2) | $CONHC_6H_5$ | 0,77 | 0,82 | | 0,80 |
| 94 | S–Ar | $NH_2$ | $NH_2$ | (2) | $COOC_5H_{11}$ | | 0,79 | 0,78 | 0,76 |
| 95 | S–Ar | $NH_2$ | $NH_2$ | (2) | $COOC_6H_5$ | 0,79 | 0,82 | | 0,81 |
| 96 | S–Ar | $NH_2$ | $NH_2$ | (2) | $COOC_6H_4(3')CH_3$ | 0,79 | 0,82 | 0,82 | |
| 97 | S–Ar | $NH_2$ | $NH_2$ | (2) | $COOC_6H_4(4')COOC_5H_{11}$ | 0,79 | 0,82 | 0,82 | |
| 98 | S–Ar | $NH_2$ | $NH_2$ | (2) | $OC_6H_5$ | | 0,82 | 0,81 | 0,80 |
| 99 | S–Ar | $NH_2$ | $NH_2$ | (2) | $OC_6H_4(3')F$ | | | 0,82 | 0,80 |
| 100 | S–Ar | $NH_2$ | $NH_2$ | (2) | $OC_6H_4(4')CH_3$ | 0,78 | 0,82 | | |
| 101 | S–Ar | $NH_2$ | $NH_2$ | (2) | $OC_6H_4(4')COOC_5H_{11}$ | 0,77 | 0,82 | 0,81 | |
| 102 | S–Ar | $NH_2$ | $NH_2$ | (6) | $CH_3$ | 0,71 | 0,76 | 0,76 | 0,74 |
| 103 | S–Ar | $NH_2$ | $NH_2$ | (6) | $CH_2CH(CH_3)_2$ | | 0,81 | 0,81 | 0,79 |
| 104 | S–Ar | $NH_2$ | $NH_2$ | (6) | 2-Oxazolinyl | 0,77 | 0,81 | 0,81 | 0,79 |
| 105 | S–Ar | $NH_2$ | $NH_2$ | (6) | $CONHC_6H_5$ | 0,77 | 0,82 | | 0,80 |
| 106 | S–Ar | $NH_2$ | $NH_2$ | (6) | $COOC_3H_7$ | 0,73 | 0,78 | | 0,75 |
| 107 | S–Ar | $NH_2$ | $NH_2$ | (6) | $COOC_5H_{11}$ | 0,74 | 0,79 | 0,78 | 0,76 |
| 108 | S–Ar | $NH_2$ | $NH_2$ | (6) | $COOC_6H_5$ | 0,79 | 0,82 | | |
| 109 | S–Ar | $NH_2$ | $NH_2$ | (6) | $COOC_6H_4(3')CH_3$ | 0,79 | 0,82 | 0,82 | |
| 110 | S–Ar | $NH_2$ | $NH_2$ | (6) | $COOC_6H_4(4')CH_3$ | 0,80 | 0,82 | 0,82 | 0,82 |
| 111 | S–Ar | $NH_2$ | $NH_2$ | (6) | $COOC_6H_4(4')OCH_3$ | | 0,82 | 0,82 | 0,82 |
| 112 | S–Ar | $NH_2$ | $NH_2$ | (6) | $COOC_6H_4(4')COOC_5H_{11}$ | 0,79 | 0,82 | 0,82 | |
| 113 | S–Ar | $NH_2$ | $NH_2$ | (6) | $COOC_6H_4(4')C_6H_5$ | 0,81 | 0,82 | 0,82 | 0,82 |
| 114 | S–Ar | $NH_2$ | $NH_2$ | (6) | $OC_4H_9$ | 0,73 | 0,78 | 0,77 | 0,75 |
| 115 | S–Ar | $NH_2$ | $NH_2$ | (6) | $OCH_2C_6H_5$ | 0,73 | 0,78 | 0,77 | 0,75 |
| 116 | S–Ar | $NH_2$ | $NH_2$ | (6) | $OC_6H_5$ | 0,78 | 0,82 | | 0,80 |
| 117 | S–Ar | $NH_2$ | $NH_2$ | (6) | $OC_6H_4(2')OC_2H_5$ | | 0,82 | 0,82 | 0,80 |
| 118 | S–Ar | $NH_2$ | $NH_2$ | (6) | $OC_6H_4(2')Cl$ | | 0,82 | 0,82 | 0,80 |
| 119 | S–Ar | $NH_2$ | $NH_2$ | (6) | $OC_6H_4(3')CH_3$ | 0,78 | 0,82 | 0,82 | 0,80 |
| 120 | S–Ar | $NH_2$ | $NH_2$ | (6) | $OC_6H_4(3')Cl$ | 0,79 | 0,82 | 0,82 | 0,81 |
| 121 | S–Ar | $NH_2$ | $NH_2$ | (6) | $OC_6H_4(3')F$ | 0,78 | 0,82 | 0,82 | 0,80 |
| 122 | S–Ar | $NH_2$ | $NH_2$ | (6) | $OC_6H_4(4')CH_3$ | 0,78 | | 0,82 | |
| 123 | S–Ar | $NH_2$ | $NH_2$ | (6) | $OC_6H_4(4')C_6H_5$ | 0,79 | | 0,82 | |
| 124 | S–Ar | $NH_2$ | $NH_2$ | (6) | $OC_6H_4(4')COOC_2H_5$ | | 0,82 | 0,82 | 0,80 |
| 125 | S–Ar | $NH_2$ | $NH_2$ | (6) | $OC_6H_4(4')COOC_5H_{11}$ | | 0,82 | 0,81 | 0,80 |
| 126 | S–Ar | $NH_2$ | $NH_2$ | (6) | $OC_6H_4(4')Cl$ | | 0,82 | 0,81 | 0,80 |
| 127 | S–Ar | $NH_2$ | $NH_2$ | (6) | O-2-Naphthyl | | | 0,82 | 0,81 |
| 128 | $NH_2$ | S–Ar | $NH_2$ | (2) | $CONHC_6H_4(3')CH_3$ | | 0,82 | | 0,82 |
| 129 | $NH_2$ | S–Ar | $NH_2$ | (2) | $COOC_5H_{11}$ | | 0,81 | 0,80 | 0,79 |
| 130 | $NH_2$ | S–Ar | $NH_2$ | (2) | $COOC_6H_5$ | 0,81 | | 0,83 | 0,82 |
| 131 | $NH_2$ | S–Ar | $NH_2$ | (2) | $COOC_6H_4(3')F$ | 0,81 | | 0,83 | 0,82 |
| 132 | $NH_2$ | S–Ar | $NH_2$ | (2) | $COOC_6H_4(4')CH_3$ | 0,82 | 0,83 | 0,83 | |
| 133 | $NH_2$ | S–Ar | $NH_2$ | (2) | $OCH_2C_6H_5$ | 0,75 | 0,80 | 0,80 | 0,78 |
| 134 | $NH_2$ | S–Ar | $NH_2$ | (2) | $OC_6H_5$ | 0,80 | 0,82 | 0,82 | 0,82 |
| 135 | $NH_2$ | S–Ar | $NH_2$ | (2) | $OC_6H_4(3')F$ | | 0,82 | | |
| 136 | $NH_2$ | S–Ar | $NH_2$ | (2) | $OC_6H_4(4')C_6H_5$ | | | 0,83 | 0,82 |
| 137 | $NH_2$ | S–Ar | $NH_2$ | (2) | $OC_6H_4(4')COOC_5H_{11}$ | 0,80 | 0,82 | | |
| 138 | $NH_2$ | S–Ar | $NH_2$ | (3) | $CH_3$ | | 0,79 | 0,78 | |
| 139 | $NH_2$ | S–Ar | $NH_2$ | (3) | 2-Oxazolinyl | | 0,82 | 0,82 | 0,81 |
| 140 | | | | | | | | | |
| 141 | $NH_2$ | S–Ar | $NH_2$ | (3) | $CONHC_6H_5$ | 0,80 | 0,82 | 0,82 | 0,82 |
| 142 | $NH_2$ | S–Ar | $NH_2$ | (3) | $COOCH_3$ | | 0,82 | | |
| 143 | $NH_2$ | S–Ar | $NH_2$ | (3) | $COOC_5H_{11}$ | | 0,81 | 0,80 | 0,79 |
| 144 | $NH_2$ | S–Ar | $NH_2$ | (3) | $COOC_6H_4(3')CH_3$ | 0,81 | | 0,83 | 0,82 |
| 145 | $NH_2$ | S–Ar | $NH_2$ | (3) | $COOC_6H_4(4')Cl$ | 0,81 | 0,83 | | 0,82 |
| 146 | $NH_2$ | S–Ar | $NH_2$ | (3) | $COOC_6H_4(4')COOC_5H_{11}$ | 0,81 | | 0,82 | 0,82 |
| 147 | $NH_2$ | S–Ar | $NH_2$ | (3) | $OC_6H_5$ | | 0,82 | 0,82 | 0,82 |

Tabelle 2 (Fortsetzung)

| | Y′ | Y″ | Y‴ | X | Q | $S_1$ | $S_2$ | $S_3$ | $S_4$ |
|---|---|---|---|---|---|---|---|---|---|
| 148 | $NH_2$ | S–Ar | $NH_2$ | (3) | $OC_6H_4(2')OC_2H_5$ | 0,80 | 0,82 | | |
| 149 | $NH_2$ | S–Ar | $NH_2$ | (3) | $OC_6H_4(2')Cl$ | 0,80 | 0,82 | 0,82 | |
| 150 | $NH_2$ | S–Ar | $NH_2$ | (3) | $OC_6H_4(3')CH_3$ | | 0,82 | 0,82 | 0,82 |
| 151 | $NH_2$ | S–Ar | $NH_2$ | (3) | $OC_6H_4(3')Cl$ | 0,81 | | 0,82 | |
| 152 | $NH_2$ | S–Ar | $NH_2$ | (3) | $OC_6H_4(3')F$ | 0,80 | | 0,82 | 0,82 |
| 153 | $NH_2$ | S–Ar | $NH_2$ | (3) | $OC_6H_4(4')CH_3$ | 0,80 | 0,82 | | 0,82 |
| 154 | $NH_2$ | S–Ar | $NH_2$ | (3) | $OC_6H_4(4')OCH_3$ | 0,81 | | 0,82 | |
| 155 | $NH_2$ | S–Ar | $NH_2$ | (3) | $OC_6H_4(4')C_6H_5$ | | 0,83 | | 0,82 |
| 156 | $NH_2$ | S–Ar | $NH_2$ | (3) | $OC_6H_4(4')COOC_2H_5$ | 0,80 | 0,82 | 0,82 | 0,82 |
| 157 | $NH_2$ | S–Ar | $NH_2$ | (3) | $OC_6H_4(4')COOC_5H_{11}$ | | 0,82 | | |
| 158 | $NH_2$ | S–Ar | $NH_2$ | (3) | $OC_6H_4(4')Cl$ | 0,80 | 0,82 | 0,82 | 0,82 |
| 159 | S–Ar | $NH_2$ | OH | (6) | $CH_3$ | | 0,74 | 0,73 | 0,71 |
| 160 | S–Ar | $NH_2$ | OH | (6) | $COOC_5H_{11}$ | | 0,76 | | |
| 161 | S–Ar | $NH_2$ | OH | (6) | $COOC_6H_5$ | 0,77 | 0,81 | 0,81 | 0,79 |
| 162 | S–Ar | $NH_2$ | OH | (6) | $COOC_6H_4(4')Cl$ | 0,77 | 0,81 | 0,81 | 0,79 |
| 163 | S–Ar | $NH_2$ | OH | (6) | $COOC_6H_4(4')COOC_5H_{11}$ | 0,77 | 0,81 | 0,81 | 0,79 |
| 164 | S–Ar | $NH_2$ | OH | (6) | $OC_4H_9$ | | | 0,75 | 0,73 |
| 165 | S–Ar | $NH_2$ | OH | (6) | $OC_6H_5$ | 0,75 | | 0,79 | |
| 166 | S–Ar | $NH_2$ | OH | (6) | $OC_6H_4(3')F$ | | 0,80 | | 0,78 |
| 167 | S–Ar | $NH_2$ | OH | (6) | $OC_6H_4(4')CH_3$ | | 0,80 | | 0,78 |
| 168 | S–Ar | $NH_2$ | OH | (6) | $OC_6H_4(4')COOC_5H_{11}$ | | 0,79 | | |
| 169 | S–Ar | $NH_2$ | OH | (3) | 2-Oxazolinyl | | 0,79 | | |
| 170 | S–Ar | $NH_2$ | OH | (3) | $CONHC_6H_5$ | 0,75 | 0,79 | 0,79 | 0,77 |
| 171 | S–Ar | $NH_2$ | OH | (7) | $COOC_5H_{11}$ | | 0,76 | 0,76 | 0,74 |
| 172 | S–Ar | $NH_2$ | OH | (2) | $COOC_6H_5$ | 0,77 | 0,81 | 0,81 | 0,79 |
| 173 | S–Ar | $NH_2$ | OH | (3) | $COOC_6H_4(3')CH_3$ | 0,77 | 0,81 | 0,81 | |
| 174 | S–Ar | $NH_2$ | OH | (7) | $COOC_6H_4(4')Cl$ | | 0,81 | 0,81 | 0,79 |
| 175 | S–Ar | $NH_2$ | OH | (2) | $COOC_6H_4(4')COOC_5H_{11}$ | | | 0,81 | 0,79 |
| 176 | S–Ar | $NH_2$ | OH | (7) | $COOC_6H_4(4')C_6H_5$ | 0,79 | 0,82 | | |
| 177 | S–Ar | $NH_2$ | OH | (3) | $OC_4H_9$ | | 0,75 | 0,75 | 0,73 |
| 178 | S–Ar | $NH_2$ | OH | (7) | $O(CH_2)_2C_6H_5$ | 0,72 | | 0,76 | 0,74 |
| 179 | S–Ar | $NH_2$ | OH | (2) | $OC_6H_5$ | 0,75 | | 0,79 | 0,77 |
| 180 | S–Ar | $NH_2$ | OH | (3) | $OC_6H_4(3')CH_3$ | 0,75 | 0,80 | 0,79 | |
| 181 | S–Ar | $NH_2$ | OH | (2) | $OC_6H_4(3')F$ | | 0,80 | 0,80 | 0,78 |
| 182 | S–Ar | $NH_2$ | OH | (7) | $OC_6H_4(4')C_6H_5$ | 0,77 | 0,81 | | |
| 183 | S–Ar | $NH_2$ | OH | (2) | $OC_6H_4(4')COOC_5H_{11}$ | | 0,79 | | |
| 184 | $NH_2$ | S–Ar | OH | (3) | $CH_3$ | | 0,76 | 0,76 | |
| 185 | $NH_2$ | S–Ar | OH | (3) | 2-Oxazolinyl | | 0,81 | 0,81 | |
| 186 | $NH_2$ | S–Ar | OH | (3) | $CONHC_6H_5$ | 0,77 | 0,81 | | |
| 187 | $NH_2$ | S–Ar | OH | (3) | $COOC_6H_4(4')COOC_5H_{11}$ | | 0,82 | | |
| 188 | $NH_2$ | S–Ar | OH | (3) | $OC_6H_4(4')C_6H_5$ | | 0,82 | | |
| 189 | $NH_2$ | S–Ar | OH | (3) | $OC_6H_4(3')COOC_5H_{11}$ | | 0,81 | 0,81 | |
| 190 | $NH_2$ | S–Ar | OH | (7) | $CH_2CH(CH_3)_2$ | | 0,81 | | |
| 191 | $NH_2$ | S–Ar | OH | (7) | $CONHC_6H_5$ | | | 0,81 | |
| 192 | $NH_2$ | S–Ar | OH | (7) | $COOC_5H_{11}$ | | 0,79 | 0,78 | |
| 193 | $NH_2$ | S–Ar | OH | (7) | $COOC_6H_5$ | | 0,82 | 0,82 | |
| 194 | $NH_2$ | S–Ar | OH | (7) | $COOC_6H_4(4')C_6H_5$ | 0,81 | 0,82 | 0,82 | 0,82 |
| 195 | $NH_2$ | S–Ar | OH | (7) | $OC_4H_9$ | | 0,78 | 0,77 | 0,75 |
| 196 | $NH_2$ | S–Ar | OH | (7) | $OC_6H_5$ | 0,77 | 0,82 | | 0,80 |
| 197 | $NH_2$ | S–Ar | OH | (7) | $OC_6H_4(3')F$ | 0,78 | | 0,82 | 0,80 |
| 198 | $NH_2$ | S–Ar | OH | (7) | $OC_6H_4(4')SCH_3$ | | 0,82 | 0,81 | |
| 199 | $NH_2$ | S–Ar | OH | (7) | $OC_6H_4(4')COOC_5H_{11}$ | | 0,81 | 0,81 | 0,79 |
| 200 | $NH_2$ | S–Ar | Cl | (3) | $CH_3$ | | 0,75 | | |
| 201 | $NH_2$ | S–Ar | Cl | (3) | $COOC_5H_{11}$ | | 0,78 | 0,77 | |
| 202 | $NH_2$ | S–Ar | Cl | (3) | $COOC_6H_5$ | 0,78 | 0,82 | 0,82 | 0,80 |
| 203 | $NH_2$ | S–Ar | Cl | (2) | $COOC_6H_4(4')CH_3$ | | 0,82 | | |
| 204 | $NH_2$ | S–Ar | Cl | (3) | $OC_6H_5$ | 0,77 | 0,81 | 0,81 | |
| 205 | $NH_2$ | S–Ar | Cl | (2) | $OC_6H_4(4')C_6H_5$ | | | 0,82 | |
| 206 | S–Ar | $NH_2$ | H | (6) | $CH_3$ | | 0,75 | 0,75 | 0,73 |
| 207 | S–Ar | $NH_2$ | H | (6) | 2-Oxazolinyl | 0,76 | 0,80 | 0,80 | 0,78 |
| 208 | S–Ar | $NH_2$ | H | (6) | $CONHC_6H_5$ | 0,76 | 0,81 | 0,80 | 0,79 |

Tabelle 2 (Fortsetzung)

| | Y′ | Y″ | Y‴ | X | Q | $S_1$ | $S_2$ | $S_3$ | $S_4$ |
|---|---|---|---|---|---|---|---|---|---|
| 209 | S–Ar | $NH_2$ | H | (6) | $COOCH_3$ | | 0,79 | | |
| 210 | S–Ar | $NH_2$ | H | (6) | $COOC_3H_7$ | | 0,77 | 0,76 | |
| 211 | S–Ar | $NH_2$ | H | (6) | $COOC_5H_{11}$ | 0,73 | 0,78 | 0,77 | |
| 212 | S–Ar | $NH_2$ | H | (6) | $COOC_6H_5$ | | 0,82 | 0,82 | 0,80 |
| 213 | S–Ar | $NH_2$ | H | (6) | $COOC_6H_4(3')CH_3$ | 0,79 | | 0,82 | 0,81 |
| 214 | S–Ar | $NH_2$ | H | (6) | $COOC_6H_4(4')CH_3$ | | | 0,82 | 0,81 |
| 215 | S–Ar | $NH_2$ | H | (6) | $COOC_6H_4(4')Cl$ | 0,78 | 0,82 | 0,82 | |
| 216 | S–Ar | $NH_2$ | H | (6) | $COOC_6H_4(4')COOC_5H_{11}$ | | 0,82 | 0,82 | 0,80 |
| 217 | S–Ar | $NH_2$ | H | (6) | $COOC_6H_4(4')C_6H_5$ | 0,80 | 0,82 | 0,82 | |
| 218 | S–Ar | $CH_3$ | H | (2) | 2-Oxazolinyl | | 0,80 | 0,80 | |
| 219 | S–Ar | $NH_2$ | H | (2) | $CONHC_6H_5$ | 0,76 | 0,81 | | |
| 220 | S–Ar | $NH_2$ | H | (2) | $COOC_5H_{11}$ | | 0,78 | | 0,75 |
| 221 | S–Ar | $NH_2$ | H | (2) | $COOC_6H_5$ | | | 0,82 | 0,80 |
| 222 | S–Ar | $NH_2$ | H | (2) | $COOC_6H_4(3')CH_3$ | 0,79 | 0,82 | | 0,81 |
| 223 | S–Ar | $NH_2$ | H | (2) | $COOC_6H_4(4')CH_3$ | | 0,82 | 0,82 | 0,81 |
| 224 | S–Ar | $NH_2$ | H | (2) | $COOC_6H_4(4')COOC_5H_{11}$ | | 0,82 | 0,82 | |
| 225 | S–Ar | $NH_2$ | H | (2) | $COOC_6H_4(4')C_6H_5$ | | | 0,82 | |
| 226 | S–Ar | $NH_2$ | H | (2) | $OC_6H_5$ | 0,77 | 0,81 | 0,81 | 0,79 |
| 227 | S–Ar | $NH_2$ | H | (2) | $OC_6H_4(4')COOC_5H_{11}$ | 0,76 | 0,81 | | 0,79 |
| 228 | S–Ar | $NH_2$ | H | (3) | $CH_2CH(CH_3)_2$ | | 0,80 | | |
| 229 | S–Ar | $NH_2$ | H | (3) | 2-Oxazolinyl | 0,76 | 0,80 | | 0,78 |
| 230 | S–Ar | $NH_2$ | H | (3) | $CONHC_6H_5$ | | 0,81 | | 0,79 |
| 231 | S–Ar | $NH_2$ | H | (3) | $COOC_5H_{11}$ | | 0,78 | | |
| 232 | S–Ar | $NH_2$ | H | (3) | $COOC_6H_5$ | | 0,82 | | 0,80 |
| 233 | S–Ar | $NH_2$ | H | (3) | $COOC_6H_4(4')CH_3$ | 0,79 | 0,82 | 0,82 | 0,81 |
| 234 | S–Ar | $NH_2$ | H | (3) | $COOC_6H_4(4')C_6H_5$ | | 0,82 | | |
| 235 | S–Ar | $NH_2$ | H | (3) | $OC_4H_9$ | 0,72 | 0,77 | | |
| 236 | S–Ar | $NH_2$ | H | (3) | $OC_6H_5$ | 0,77 | 0,81 | 0,81 | 0,79 |
| 237 | S–Ar | $NH_2$ | H | (3) | $OC_6H_4(4')COOC_2H_5$ | | 0,81 | | 0,79 |
| 238 | S–Ar | $NH_2$ | H | (3) | $OC_6H_4(4')COOC_5H_{11}$ | | 0,81 | 0,80 | |
| 239 | S–Ar | $NH_2$ | H | (3) | O-2-Naphthyl | | 0,82 | | |
| 240 | $NH_2$ | H | S–Ar | (3) | 2-Oxazolinyl | | 0,77 | 0,77 | 0,75 |
| 241 | $NH_2$ | H | S–Ar | (3) | $CONHC_6H_5$ | | 0,78 | 0,78 | 0,76 |
| 242 | $NH_2$ | H | S–Ar | (3) | $COOCH_3$ | | 0,76 | 0,75 | |
| 243 | $NH_2$ | H | S–Ar | (3) | $COOC_5H_{11}$ | | 0,75 | 0,74 | 0,72 |
| 244 | $NH_2$ | H | S–Ar | (3) | $COOC_6H_5$ | | 0,80 | | 0,78 |
| 245 | $NH_2$ | H | S–Ar | (3) | $COOC_6H_4(3')CH_3$ | 0,75 | 0,80 | 0,80 | |
| 246 | $NH_2$ | H | S–Ar | (3) | $COOC_6H_4(4')CH_3$ | | 0,80 | | 0,78 |
| 247 | $NH_2$ | H | S–Ar | (3) | $COOC_6H_4(4')Cl$ | | 0,80 | 0,79 | |
| 248 | $NH_2$ | H | S–Ar | (3) | $COOC_6H_4(4')COOC_5H_{11}$ | 0,75 | | | 0,77 |
| 249 | $NH_2$ | H | S–Ar | (3) | $COOC_6H_4(4')C_6H_5$ | 0,77 | 0,81 | | 0,79 |
| 250 | $NH_2$ | H | S–Ar | (3) | $OC_6H_5$ | | 0,78 | 0,78 | 0,76 |
| 251 | $NH_2$ | H | S–Ar | (3) | $OC_6H_4(2')Cl$ | | 0,79 | 0,78 | |
| 252 | $NH_2$ | H | S–Ar | (3) | $OC_6H_4(3')CH_3$ | 0,74 | 0,78 | | 0,76 |
| 253 | $NH_2$ | H | S–Ar | (3) | $OC_6H_4(3')F$ | 0,74 | 0,79 | 0,78 | |
| 254 | $NH_2$ | H | S–Ar | (3) | $OC_6H_4(4')CH_3$ | 0,74 | 0,79 | | 0,76 |
| 255 | $NH_2$ | H | S–Ar | (3) | $OC_6H_4(4')C_6H_5$ | | | 0,79 | |
| 256 | $NH_2$ | H | S–Ar | (3) | $OC_6H_4(4')COOC_5H_{11}$ | | 0,78 | | 0,76 |
| 257 | $NH_2$ | H | S–Ar | (2) | 2-Oxazolinyl | | 0,77 | 0,77 | 0,75 |
| 258 | $NH_2$ | H | S–Ar | (2) | $CONHC_6H_5$ | | 0,78 | | |
| 259 | $NH_2$ | H | S–Ar | (2) | $COOC_5H_{11}$ | | 0,75 | | |
| 260 | $NH_2$ | H | S–Ar | (2) | $COOC_6H_5$ | | 0,80 | 0,79 | 0,78 |
| 261 | $NH_2$ | H | S–Ar | (2) | $COOC_6H_4(3')CH_3$ | | | 0,80 | |
| 262 | $NH_2$ | H | S–Ar | (2) | $OC_6H_5$ | 0,73 | 0,78 | 0,78 | 0,76 |
| 263 | $NH_2$ | H | S–Ar | (2) | $OC_6H_4(4')C_6H_5$ | | 0,80 | 0,79 | |
| 264 | $NH_2$ | H | S–Ar | (2) | $OC_6H_4(4')COOC_5H_{11}$ | | 0,78 | 0,78 | |
| 265 | $NH_2$ | H | S–Ar | (7) | 2-Oxazolinyl | | 0,77 | 0,77 | 0,75 |
| 266 | $NH_2$ | H | S–Ar | (7) | $CONHC_6H_4(4')CH_3$ | 0,73 | 0,78 | 0,78 | 0,76 |
| 267 | $NH_2$ | H | S–Ar | (7) | $COOCH_3$ | | 0,76 | | 0,73 |
| 268 | $NH_2$ | H | S–Ar | (7) | $COOC_5H_{11}$ | | 0,75 | 0,74 | |
| 269 | $NH_2$ | H | S–Ar | (7) | $COOC_6H_5$ | 0,75 | 0,80 | 0,79 | 0,78 |

Tabelle 2 (Fortsetzung)

| | Y′ | Y″ | Y‴ | X | Q | $S_1$ | $S_2$ | $S_3$ | $S_4$ |
|---|---|---|---|---|---|---|---|---|---|
| 270 | $NH_2$ | H | S–Ar | (7) | $COOC_6H_4(3')CH_3$ | 0,75 | 0,80 | | 0,78 |
| 271 | $NH_2$ | H | S–Ar | (7) | $COOC_6H_4(4')CH_3$ | 0,76 | | 0,80 | 0,78 |
| 272 | $NH_2$ | H | S–Ar | (7) | $COOC_6H_4(4')COOC_5H_{11}$ | | 0,80 | 0,79 | |
| 273 | $NH_2$ | H | S–Ar | (7) | $COOC_6H_4(4')C_6H_5$ | 0,77 | 0,81 | | 0,79 |
| 274 | $NH_2$ | S–Ar | H | (3) | $CH_3$ | 0,73 | 0,78 | 0,77 | |
| 275 | $NH_2$ | S–Ar | H | (3) | $CH_2CH(CH_3)_2$ | | 0,82 | 0,82 | |
| 276 | $NH_2$ | S–Ar | H | (3) | 2-Oxazolinyl | | 0,82 | 0,82 | 0,80 |
| 277 | $NH_2$ | S–Ar | H | (3) | $CONHC_6H_5$ | 0,79 | 0,82 | | 0,81 |
| 278 | $NH_2$ | S–Ar | H | (3) | $COOC_3H_7$ | | 0,79 | 0,79 | |
| 279 | $NH_2$ | S–Ar | H | (3) | $COOC_5H_{11}$ | 0,75 | 0,80 | 0,80 | |
| 280 | $NH_2$ | S–Ar | H | (3) | $COOC_6H_5$ | 0,80 | 0,82 | | 0,82 |
| 281 | $NH_2$ | S–Ar | H | (3) | $COOC_6H_4(3')CH_3$ | | | 0,82 | 0,82 |
| 282 | $NH_2$ | S–Ar | H | (3) | $COOC_6H_4(4')CH_3$ | 0,81 | 0,82 | 0,82 | 0,82 |
| 283 | $NH_2$ | S–Ar | H | (3) | $COOC_6H_4(4')OCH_3$ | | 0,83 | | |
| 284 | $NH_2$ | S–Ar | H | (3) | $COOC_6H_4(4')Cl$ | | 0,82 | | 0,82 |
| 285 | $NH_2$ | S–Ar | H | (3) | $COOC_6H_4(4')COOC_5H_{11}$ | 0,80 | 0,82 | 0,82 | 0,82 |
| 286 | $NH_2$ | S–Ar | H | (3) | $COOC_6H_4(4')C_6H_5$ | | | 0,83 | |
| 287 | $NH_2$ | S–Ar | H | (3) | $OC_4H_9$ | | 0,79 | | 0,77 |
| 288 | $NH_2$ | S–Ar | H | (3) | $O(CH_2)_2C_6H_5$ | 0,76 | | 0,80 | |
| 289 | $NH_2$ | S–Ar | H | (3) | $OC_6H_5$ | 0,79 | 0,82 | 0,82 | 0,81 |
| 290 | $NH_2$ | S–Ar | H | (3) | $OC_6H_4(2')Cl$ | | 0,82 | | |
| 291 | $NH_2$ | S–Ar | H | (3) | $OC_6H_4(3')CH_3$ | | 0,82 | 0,82 | |
| 292 | $NH_2$ | S–Ar | H | (3) | $OC_6H_4(3')F$ | 0,79 | 0,82 | | 0,81 |
| 293 | $NH_2$ | S–Ar | H | (3) | $OC_6H_4(4')CH_3$ | 0,79 | 0,82 | 0,82 | |
| 294 | $NH_2$ | S–Ar | H | (3) | $OC_6H_4(4')C_6H_5$ | | 0,82 | 0,82 | 0,82 |
| 295 | $NH_2$ | S–Ar | H | (3) | $OC_6H_4(4')COOC_2H_5$ | | | 0,82 | 0,81 |
| 296 | $NH_2$ | S–Ar | H | (3) | $OC_6H_4(4')COOC_5H_{11}$ | 0,79 | 0,82 | 0,82 | 0,81 |
| 297 | $NH_2$ | S–Ar | H | (3) | O-2-Naphthyl | | 0,82 | | 0,82 |
| 298 | $NH_2$ | S–Ar | H | (2) | 2-Oxazolinyl | | 0,82 | | 0,80 |
| 299 | $NH_2$ | S–Ar | H | (2) | $CONHC_6H_4(4')C_6H_5$ | 0,79 | 0,82 | | |
| 300 | $NH_2$ | S–Ar | H | (2) | $COOC_5H_{11}$ | | 0,80 | 0,80 | 0,78 |
| 301 | $NH_2$ | S–Ar | H | (2) | $COOC_6H_5$ | 0,80 | 0,82 | 0,82 | |
| 302 | $NH_2$ | S–Ar | H | (2) | $O(CH_2)_2C_6H_5$ | | 0,80 | 0,80 | 0,78 |
| 303 | $NH_2$ | S–Ar | H | (2) | $OC_6H_5$ | 0,79 | 0,82 | | 0,81 |
| 304 | $NH_2$ | S–Ar | H | (2) | $OC_6H_4(4')COOC_5H_{11}$ | | 0,82 | | |
| 305 | $NH_2$ | S–Ar | H | (6) | $CH_3$ | | 0,78 | | 0,75 |
| 306 | $NH_2$ | S–Ar | H | (6) | 2-Oxazolinyl | | 0,82 | 0,82 | |
| 307 | $NH_2$ | S–Ar | H | (6) | $CONHC_6H_4(3')Cl$ | | 0,82 | 0,82 | |
| 308 | $NH_2$ | S–Ar | H | (6) | $COOC_5H_{11}$ | 0,75 | 0,80 | 0,80 | |
| 309 | $NH_2$ | S–Ar | H | (6) | $COOC_6H_5$ | | 0,82 | 0,82 | 0,82 |
| 310 | $NH_2$ | S–Ar | H | (6) | $COOC_6H_4(4')COOC_5H_{11}$ | 0,80 | 0,82 | | 0,82 |
| 311 | OH | S–Ar | OH | (3) | 2-Oxazolinyl | 0,74 | | 0,78 | |
| 312 | OH | S–Ar | OH | (3) | $CONHC_6H_5$ | | 0,79 | | |
| 313 | OH | S–Ar | OH | (3) | $COOC_5H_{11}$ | | 0,76 | 0,76 | |
| 314 | OH | S–Ar | OH | (3) | $COOC_6H_5$ | 0,77 | 0,81 | | 0,79 |
| 315 | OH | S–Ar | OH | (3) | $COOC_6H_4(3')CH_3$ | 0,77 | | 0,81 | |
| 316 | OH | S–Ar | OH | (3) | $COOC_6H_4(4')C_6H_5$ | | 0,82 | 0,82 | |
| 317 | OH | S–Ar | OH | (3) | $OCH_2C_6H_5$ | | 0,75 | | |
| 318 | OH | S–Ar | OH | (3) | $OC_6H_5$ | 0,75 | 0,79 | 0,79 | 0,77 |
| 319 | OH | S–Ar | OH | (3) | $OC_6H_4(3')Cl$ | | | | 0,78 |
| 320 | OH | S–Ar | OH | (3) | $OC_6H_4(4')C_6H_5$ | | | 0,81 | 0,79 |
| 321 | OH | S–Ar | OH | (3) | $OC_6H_4(4')COOC_5H_{11}$ | | 0,79 | 0,79 | 0,77 |
| 322 | OH | S–Ar | H | (3) | $CH_3$ | 0,70 | 0,75 | | 0,72 |
| 323 | OH | S–Ar | H | (3) | $COOC_5H_{11}$ | 0,73 | 0,78 | | |
| 324 | OH | S–Ar | H | (3) | $COOC_6H_5$ | | 0,82 | 0,82 | |
| 325 | OH | S–Ar | H | (3) | $COOC_6H_4(4')C_6H_5$ | | 0,82 | | |
| 326 | OH | S–Ar | H | (3) | $OC_6H_5$ | 0,76 | 0,81 | 0,80 | 0,79 |
| 327 | OH | S–Ar | H | (3) | $OC_6H_4(4')COOC_5H_{11}$ | | | 0,80 | |
| 328 | OH | S–Ar | H | (2) | 2-Oxazolinyl | | 0,80 | 0,80 | |
| 329 | OH | S–Ar | H | (2) | $COOC_3H_7$ | | | 0,76 | 0,74 |
| 330 | OH | S–Ar | H | (2) | $COOC_6H_4(4')COOC_5H_{11}$ | 0,78 | 0,82 | 0,82 | |

Tabelle 2 (Fortsetzung)

| | Y′ | Y″ | Y‴ | X | Q | $S_1$ | $S_2$ | $S_3$ | $S_4$ |
|---|---|---|---|---|---|---|---|---|---|
| 331 | OH | S–Ar | H | (2) | $OC_4H_9$ | 0,77 | 0,76 | | |
| 332 | OH | S–Ar | H | (2) | $OC_6H_4(3')F$ | | 0,81 | 0,81 | |
| 333 | OH | S–Ar | H | (2) | O-2-Naphthyl | | | 0,82 | |
| 334 | OH | S–Ar | H | (6) | $CH_3$ | | 0,75 | | |
| 335 | OH | S–Ar | H | (6) | 2-Oxazolinyl | | 0,80 | 0,80 | 0,78 |
| 336 | OH | S–Ar | H | (6) | $CONHC_6H_4(3')F$ | 0,76 | 0,81 | | 0,79 |
| 337 | OH | S–Ar | H | (6) | $COOCH_3$ | | 0,79 | 0,78 | |
| 338 | OH | S–Ar | H | (6) | $COOC_6H_4(3')F$ | | 0,82 | 0,82 | 0,80 |
| 339 | OH | S–Ar | H | (6) | $COOC_6H_4(4')C_6H_5$ | 0,80 | | | 0,82 |
| 340 | Cl | S–Ar | H | (6) | $COOC_6H_5$ | | | 0,81 | 0,80 |
| 341 | S–Ar | H | H | (2) | 2-Oxazolinyl | 0,75 | 0,79 | 0,79 | |
| 342 | S–Ar | H | H | (2) | $CONHC_6H_5$ | 0,75 | 0,80 | | 0,78 |
| 343 | S–Ar | H | H | (2) | $COOC_3H_7$ | | 0,76 | 0,75 | 0,73 |
| 344 | S–Ar | H | H | (2) | $COOC_5H_{11}$ | | 0,77 | 0,76 | |
| 345 | S–Ar | H | H | (2) | $COOC_6H_5$ | | 0,82 | 0,81 | 0,80 |
| 346 | S–Ar | H | H | (2) | $COOC_6H_4(3')CH_3$ | | 0,82 | 0,81 | 0,80 |
| 347 | S–Ar | H | H | (2) | $COOC_6H_4(4')CH_3$ | | 0,82 | 0,82 | 0,80 |
| 348 | S–Ar | H | H | (2) | $COOC_6H_4(4')Cl$ | 0,77 | 0,81 | 0,81 | |
| 349 | S–Ar | H | H | (2) | $COOC_6H_4(4')COOC_5H_{11}$ | | 0,81 | 0,81 | |
| 350 | S–Ar | H | H | (2) | $OC_4H_9$ | 0,71 | 0,76 | | 0,73 |
| 351 | S–Ar | H | H | (2) | $O(CH_2)_2C_6H_5$ | 0,72 | | 0,77 | |
| 352 | S–Ar | H | H | (2) | $OC_6H_5$ | 0,76 | | 0,80 | |
| 353 | S–Ar | H | H | (2) | $OC_6H_5(2')Cl$ | | 0,81 | 0,80 | 0,79 |
| 354 | S–Ar | H | H | (2) | $OC_6H_4(3')CH_3$ | 0,76 | 0,80 | 0,80 | |
| 355 | S–Ar | H | H | (2) | $OC_6H_4(3')F$ | | 0,81 | 0,80 | 0,79 |
| 356 | S–Ar | H | H | (2) | $OC_6H_4(4')OCH_3$ | 0,77 | 0,81 | 0,81 | 0,79 |
| 357 | S–Ar | H | H | (2) | $OC_6H_4(4')C_6H_5$ | 0,77 | 0,82 | 0,81 | 0,80 |
| 358 | S–Ar | H | H | (2) | $OC_6H_4(4')COOC_2H_5$ | 0,76 | 0,80 | | 0,78 |
| 359 | S–Ar | H | H | (2) | $OC_6H_4(4')COOC_5H_{11}$ | 0,75 | | 0,80 | 0,78 |
| 360 | S–Ar | H | H | (2) | O-2-Naphthyl | | 0,81 | 0,81 | 0,79 |
| 361 | H | H | S–Ar | (2) | 2-Oxazolinyl | | 0,70 | | |
| 362 | H | H | S–Ar | (2) | $CONHC_6H_5$ | 0,65 | 0,71 | 0,70 | |
| 363 | H | H | S–Ar | (2) | $COOC_3H_7$ | | 0,65 | 0,64 | |
| 364 | H | H | S–Ar | (2) | $COOC_6H_5$ | | 0,73 | 0,73 | 0,70 |
| 365 | H | H | S–Ar | (2) | $COOC_6H_4(4')OCH_3$ | 0,69 | 0,74 | | 0,71 |
| 366 | H | H | S–Ar | (2) | $COOC_6H_4(4')COOC_5H_{11}$ | | 0,73 | 0,72 | |
| 367 | H | S–Ar | H | (2) | 2-Oxazolinyl | | 0,82 | 0,81 | 0,79 |
| 368 | H | S–Ar | H | (2) | $CONHC_6H_5$ | | 0,82 | 0,82 | |
| 369 | H | S–Ar | H | (2) | $COOC_3H_7$ | | 0,78 | 0,78 | |
| 370 | H | S–Ar | H | (2) | $COOC_5H_{11}$ | 0,74 | | 0,79 | |
| 371 | H | S–Ar | H | (2) | $COOC_6H_5$ | | | 0,82 | 0,82 |
| 372 | H | S–Ar | H | (2) | $COOC_6H_4(3')CH_3$ | | 0,82 | 0,82 | 0,82 |
| 373 | H | S–Ar | H | (2) | $COOC_6H_4(4')OCH_3$ | 0,80 | | 0,82 | 0,82 |
| 374 | H | S–Ar | H | (2) | $COOC_6H_4(4')COOC_5H_{11}$ | 0,79 | 0,82 | | 0,81 |
| 375 | $NH_2$ | $NH_2$ | $NH_2$ | (2) | $CH_3$ | | 0,72 | | |
| 376 | $NH_2$ | $NH_2$ | $NH_2$ | (3) | 2-Oxazolinyl | | 0,78 | 0,78 | 0,77 |
| 377 | $NH_2$ | $NH_2$ | $NH_2$ | (3) | $CONHC_6H_5$ | | 0,79 | 0,78 | |
| 378 | $NH_2$ | $NH_2$ | $NH_2$ | (7) | $COOC_3H_7$ | | 0,74 | 0,74 | 0,73 |
| 379 | $NH_2$ | $NH_2$ | $NH_2$ | (6) | $COOC_5H_{11}$ | 0,73 | | 0,75 | 0,74 |
| 380 | $NH_2$ | $NH_2$ | $NH_2$ | (6) | $COOC_6H_5$ | 0,78 | 0,80 | | |
| 381 | $NH_2$ | $NH_2$ | $NH_2$ | (7) | $COOC_6H_4(3')CH_3$ | | 0,80 | | 0,79 |
| 382 | $NH_2$ | $NH_2$ | $NH_2$ | (2) | $COOC_6H_4(4')COOC_5H_{11}$ | | 0,80 | | |
| 383 | $NH_2$ | $NH_2$ | $NH_2$ | (3) | $COOC_6H_4(4')C_6H_5$ | | 0,82 | 0,82 | 0,81 |
| 384 | $NH_2$ | $NH_2$ | $NH_2$ | (3) | $OC_6H_5$ | | 0,79 | 0,79 | 0,78 |
| 385 | $NH_2$ | $NH_2$ | $NH_2$ | (6) | $OC_6H_4(3')F$ | | 0,79 | | 0,78 |
| 386 | $NH_2$ | $NH_2$ | $NH_2$ | (7) | $OC_6H_4(4')CH_3$ | | 0,79 | 0,79 | 0,78 |
| 387 | $NH_2$ | $NH_2$ | H | (2) | $COOC_5H_{11}$ | | 0,74 | | 0,73 |
| 388 | $NH_2$ | $NH_2$ | H | (2) | $COOC_6H_5$ | 0,77 | 0,79 | 0,79 | |
| 389 | $NH_2$ | $NH_2$ | H | (2) | $COOC_6H_4(4')C_6H_5$ | | 0,81 | | 0,80 |
| 390 | $NH_2$ | $NH_2$ | H | (2) | $OC_6H_5$ | 0,75 | 0,78 | 0,78 | 0,77 |
| 391 | $NH_2$ | $NH_2$ | H | (2) | $OC_6H_4(3')CH_3$ | | 0,78 | | 0,77 |

Tabelle 2 (Fortsetzung)

| | Y′ | Y″ | Y‴ | X | Q | $S_1$ | $S_2$ | $S_3$ | $S_4$ |
|---|---|---|---|---|---|---|---|---|---|
| 392 | $NH_2$ | $NH_2$ | H | (3) | 2-Oxazolinyl | | 0,77 | | 0,76 |
| 393 | $NH_2$ | $NH_2$ | H | (3) | $CONHC_6H_5$ | 0,75 | 0,78 | 0,77 | 0,76 |
| 394 | $NH_2$ | $NH_2$ | H | (3) | $COOCH_3$ | | | 0,75 | |
| 395 | $NH_2$ | $NH_2$ | H | (3) | $COOC_5H_{11}$ | | 0,74 | 0,74 | 0,73 |
| 396 | $NH_2$ | $NH_2$ | H | (3) | $COOC_6H_5$ | 0,77 | 0,79 | 0,79 | |
| 397 | $NH_2$ | $NH_2$ | H | (3) | $COOC_6H_4(3')CH_3$ | | 0,80 | 0,79 | 0,79 |
| 398 | $NH_2$ | $NH_2$ | H | (3) | $COOC_6H_4(4')Cl$ | | | 0,79 | 0,78 |
| 399 | $NH_2$ | $NH_2$ | H | (3) | $COOC_6H_4(4')COOC_5H_{11}$ | 0,77 | 0,79 | | |
| 400 | $NH_2$ | $NH_2$ | H | (3) | $OCH_2C_6H_5$ | | 0,73 | | 0,72 |
| 401 | $NH_2$ | $NH_2$ | H | (3) | $OC_6H_5$ | 0,75 | 0,78 | 0,78 | 0,77 |
| 402 | $NH_2$ | $NH_2$ | H | (3) | $OC_6H_4(2')OC_2H_5$ | 0,76 | | 0,78 | 0,77 |
| 403 | $NH_2$ | $NH_2$ | H | (3) | $OC_6H_4(3')CH_3$ | | 0,78 | 0,78 | 0,77 |
| 404 | $NH_2$ | $NH_2$ | H | (3) | $OC_6H_4(3')F$ | 0,76 | 0,78 | 0,78 | |
| 405 | $NH_2$ | $NH_2$ | H | (3) | $OC_6H_4(4')CH_3$ | 0,76 | 0,78 | 0,78 | |
| 406 | $NH_2$ | $NH_2$ | H | (3) | $OC_6H_4(4')C_6H_5$ | 0,77 | 0,79 | 0,79 | |
| 407 | $NH_2$ | $NH_2$ | H | (3) | $OC_6H_4(4')COOC_5H_{11}$ | 0,75 | | 0,77 | 0,76 |
| 408 | $NH_2$ | $NH_2$ | H | (3) | O-2-Naphthyl | | | 0,79 | |
| 409 | $NH_2$ | $NH_2$ | H | (6) | $CH_3$ | | 0,71 | | |
| 410 | $NH_2$ | $NH_2$ | H | (6) | $CONHC_6H_5$ | 0,75 | 0,78 | | |
| 411 | $NH_2$ | $NH_2$ | H | (6) | $COOCH_3$ | 0,73 | 0,75 | 0,75 | |
| 412 | $NH_2$ | $NH_2$ | H | (6) | $COOC_6H_5$ | 0,77 | 0,79 | 0,79 | 0,78 |
| 413 | $NH_2$ | $NH_2$ | H | (6) | $COOC_6H_4(4')Cl$ | | 0,79 | | |
| 414 | $NH_2$ | $NH_2$ | H | (6) | $OC_6H_5$ | | 0,78 | | |
| 415 | H | $NH_2$ | $NH_2$ | (2) | $CH_3$ | | 0,71 | 0,71 | |
| 416 | H | $NH_2$ | $NH_2$ | (2) | 2-Oxazolinyl | | 0,77 | | |
| 417 | H | $NH_2$ | $NH_2$ | (2) | $CONHC_6H_5$ | | 0,78 | 0,77 | |
| 418 | H | $NH_2$ | $NH_2$ | (2) | $COOC_3H_7$ | 0,70 | 0,73 | 0,73 | |
| 419 | H | $NH_2$ | $NH_2$ | (2) | $COOC_5H_{11}$ | | | 0,74 | 0,73 |
| 420 | H | $NH_2$ | $NH_2$ | (2) | $COOC_6H_5$ | 0,77 | 0,79 | 0,79 | 0,78 |
| 421 | H | $NH_2$ | $NH_2$ | (2) | $COOC_6H_4(3')CH_3$ | | | 0,79 | |
| 422 | H | $NH_2$ | $NH_2$ | (2) | $COOC_6H_4(4')CH_3$ | | | 0,80 | |
| 423 | H | $NH_2$ | $NH_2$ | (2) | $COOC_6H_4(4')COOC_5H_{11}$ | | | 0,79 | |
| 424 | H | $NH_2$ | $NH_2$ | (6) | $CH_2CH(CH_3)_2$ | | 0,77 | | 0,76 |
| 425 | H | $NH_2$ | $NH_2$ | (6) | 2-Oxazolinyl | | 0,77 | 0,77 | |
| 426 | H | $NH_2$ | $NH_2$ | (6) | $CONHC_6H_5$ | 0,75 | | 0,77 | 0,76 |
| 427 | H | $NH_2$ | $NH_2$ | (6) | $COOC_3H_7$ | | 0,73 | 0,73 | |
| 428 | H | $NH_2$ | $NH_2$ | (6) | $COOC_6H_5$ | 0,77 | 0,79 | 0,79 | 0,78 |
| 429 | H | $NH_2$ | $NH_2$ | (6) | $COOC_6H_4(4')OCH_3$ | 0,78 | | 0,80 | 0,79 |
| 430 | H | $NH_2$ | $NH_2$ | (6) | $COOC_6H_4(4')Cl$ | 0,77 | | 0,79 | 0,78 |
| 431 | H | $NH_2$ | $NH_2$ | (6) | $OC_4H_9$ | | | 0,73 | |
| 432 | H | $NH_2$ | $NH_2$ | (6) | $O(CH_2)_2C_6H_5$ | | 0,75 | 0,75 | 0,74 |
| 433 | H | $NH_2$ | $NH_2$ | (6) | $OC_6H_5$ | 0,75 | 0,78 | 0,78 | 0,77 |
| 434 | H | $NH_2$ | $NH_2$ | (6) | $OC_6H_4(2')OC_2H_5$ | | 0,78 | | 0,77 |
| 435 | H | $NH_2$ | $NH_2$ | (6) | $OC_6H_4(3')CH_3$ | 0,76 | | | 0,77 |
| 436 | H | $NH_2$ | $NH_2$ | (6) | $OC_6H_4(3')F$ | 0,76 | | 0,78 | |
| 437 | H | $NH_2$ | $NH_2$ | (6) | $OC_6H_4(4')CH_3$ | 0,76 | | 0,78 | 0,77 |
| 438 | H | $NH_2$ | $NH_2$ | (6) | $OC_6H_4(4')OCH_3$ | | 0,79 | | 0,78 |
| 439 | H | $NH_2$ | $NH_2$ | (6) | $OC_6H_4(4')SCH_3$ | | 0,78 | | |
| 440 | H | $NH_2$ | $NH_2$ | (6) | $OC_6H_4(4')COOC_5H_{11}$ | 0,75 | 0,78 | | 0,76 |
| 441 | H | $NH_2$ | $NH_2$ | (7) | 2-Oxazolinyl | 0,75 | | 0,77 | 0,76 |
| 442 | H | $NH_2$ | $NH_2$ | (7) | $CONHC_6H_5$ | 0,75 | | 0,77 | 0,76 |
| 443 | H | $NH_2$ | $NH_2$ | (7) | $COOC_5H_{11}$ | 0,71 | | 0,74 | 0,73 |
| 444 | H | $NH_2$ | $NH_2$ | (7) | $COOC_6H_5$ | | 0,79 | | 0,78 |
| 445 | H | $NH_2$ | $NH_2$ | (7) | $COOC_6H_4(3')CH_3$ | 0,77 | | 0,79 | 0,79 |
| 446 | H | $NH_2$ | $NH_2$ | (7) | $COOC_6H_4(4')CH_3$ | 0,78 | | 0,80 | |
| 447 | H | $NH_2$ | $NH_2$ | (7) | $OC_6H_5$ | 0,75 | 0,78 | 0,78 | 0,77 |
| 448 | H | $NH_2$ | $NH_2$ | (7) | $OC_6H_4(2')Cl$ | 0,76 | | 0,78 | 0,77 |
| 449 | H | $NH_2$ | $NH_2$ | (7) | $OC_6H_4(3')F$ | 0,76 | | 0,78 | 0,77 |
| 450 | H | $NH_2$ | $NH_2$ | (7) | $OC_6H_4(4')CH_3$ | | 0,78 | | 0,77 |
| 451 | H | $NH_2$ | $NH_2$ | (7) | $OC_6H_4(4')OCH_3$ | 0,76 | 0,79 | | 0,78 |
| 452 | H | $NH_2$ | $NH_2$ | (7) | $OC_6H_4(4')C_6H_5$ | 0,77 | | 0,79 | |
| 453 | H | $NH_2$ | $NH_2$ | (7) | $OC_6H_4(4')SCH_3$ | | 0,78 | 0,78 | 0,77 |

Tabelle 2 (Fortsetzung)

| | Y′ | Y″ | Y‴ | X | Q | $S_1$ | $S_2$ | $S_3$ | $S_4$ |
|---|---|---|---|---|---|---|---|---|---|
| 454 | H | $NH_2$ | $NH_2$ | (7) | $OC_6H_4(4')COOC_2H_5$ | 0,76 | 0,78 | 0,78 | 0,77 |
| 455 | H | $NH_2$ | $NH_2$ | (7) | $OC_6H_4(4')COOC_5H_{11}$ | | 0,78 | 0,77 | 0,76 |
| 456 | H | $NH_2$ | $NH_2$ | (7) | $OC_6H_4(4')Cl$ | | 0,78 | 0,77 | |
| 457 | H | $NH_2$ | $NH_2$ | (7) | O-2-Naphthyl | | 0,79 | | |
| 458 | $NH_2$ | H | $NH_2$ | (2) | 2-Oxazolinyl | | 0,77 | | 0,76 |
| 459 | $NH_2$ | H | $NH_2$ | (2) | $CONHC_6H_5$ | | 0,78 | 0,77 | 0,76 |
| 460 | $NH_2$ | H | $NH_2$ | (2) | $COOC_5H_{11}$ | | 0,74 | 0,74 | 0,73 |
| 461 | $NH_2$ | H | $NH_2$ | (2) | $COOC_6H_5$ | | 0,79 | | 0,78 |
| 462 | $NH_2$ | H | $NH_2$ | (2) | $COOC_6H_4(4')COOC_5H_{11}$ | | 0,79 | | |
| 463 | $NH_2$ | H | $NH_2$ | (2) | $OC_6H_5$ | | 0,78 | 0,78 | 0,77 |
| 464 | $NH_2$ | H | $NH_2$ | (2) | $OC_6H_4(4')Cl$ | | 0,78 | 0,77 | |
| 465 | $NH_2$ | H | $NH_2$ | (3) | $CH_3$ | 0,68 | | | 0,70 |
| 466 | $NH_2$ | H | $NH_2$ | (3) | 2-Oxazolinyl | 0,75 | | 0,77 | |
| 467 | $NH_2$ | H | $NH_2$ | (3) | $COOCH_3$ | | 0,75 | | 0,74 |
| 468 | $NH_2$ | H | $NH_2$ | (3) | $COOC_6H_4(3')CH_3$ | | 0,80 | 0,79 | |
| 469 | $NH_2$ | H | $NH_2$ | (3) | $COOC_6H_4(4')C_6H_5$ | | 0,81 | 0,81 | 0,80 |
| 470 | $NH_2$ | H | $NH_2$ | (3) | $OCH_3$ | | 0,71 | 0,71 | |
| 471 | $NH_2$ | H | $NH_2$ | (3) | $OCH_2C_6H_5$ | | 0,73 | 0,73 | 0,72 |
| 472 | $NH_2$ | H | $NH_2$ | (3) | $OC_6H_5$ | 0,75 | 0,78 | 0,78 | 0,77 |
| 473 | $NH_2$ | H | $NH_2$ | (3) | $OC_6H_4(2')OC_2H_5$ | 0,76 | 0,78 | | 0,77 |
| 474 | $NH_2$ | H | $NH_2$ | (3) | $OC_6H_4(3')F$ | 0,76 | 0,78 | 0,78 | 0,77 |
| 475 | $NH_2$ | H | $NH_2$ | (3) | $OC_6H_4(4')C_6H_5$ | 0,77 | 0,79 | 0,79 | 0,78 |
| 476 | $NH_2$ | H | $NH_2$ | (3) | $OC_6H_4(4')COOC_5H_{11}$ | 0,75 | 0,78 | 0,77 | 0,76 |
| 477 | $NH_2$ | H | $NH_2$ | (7) | 2-Oxazolinyl | | 0,77 | 0,77 | |
| 478 | $NH_2$ | H | $NH_2$ | (7) | $CONHC_6H_5$ | | 0,78 | 0,77 | |
| 479 | $NH_2$ | H | $NH_2$ | (7) | $COOC_5H_{11}$ | | 0,74 | 0,74 | |
| 480 | $NH_2$ | H | $NH_2$ | (7) | $COOC_6H_5$ | | 0,79 | 0,79 | |
| 481 | $NH_2$ | H | $NH_2$ | (7) | $COOC_6H_4(3')CH_3$ | 0,77 | 0,80 | 0,79 | 0,79 |
| 482 | $NH_2$ | H | H | (3) | $CH_3$ | 0,76 | | 0,70 | |
| 483 | $NH_2$ | H | H | (3) | $CH_2CH(CH_3)_2$ | 0,74 | 0,76 | | 0,75 |
| 484 | $NH_2$ | H | H | (3) | 2-Oxazolinyl | 0,74 | 0,76 | 0,76 | |
| 485 | $NH_2$ | H | H | (3) | $CONHC_6H_5$ | 0,74 | | 0,76 | 0,75 |
| 486 | $NH_2$ | H | H | (3) | $COOCH_3$ | | | 0,74 | 0,73 |
| 487 | $NH_2$ | H | H | (3) | $COOC_3H_7$ | 0,69 | | 0,71 | |
| 488 | $NH_2$ | H | H | (3) | $COOC_5H_{11}$ | 0,70 | 0,73 | | 0,72 |
| 489 | $NH_2$ | H | H | (3) | $COOC_6H_5$ | 0,76 | 0,79 | | 0,77 |
| 490 | $NH_2$ | H | H | (3) | $COOC_6H_4(3')CH_3$ | | 0,79 | 0,79 | 0,78 |
| 491 | $NH_2$ | H | H | (3) | $COOC_6H_4(4')CH_3$ | 0,77 | 0,79 | 0,79 | |
| 492 | $NH_2$ | H | H | (3) | $COOC_6H_4(4')CH_3$ | 0,77 | 0,79 | 0,79 | |
| 493 | $NH_2$ | H | H | (3) | $COOC_6H_4(4')Cl$ | 0,76 | 0,78 | 0,78 | |
| 494 | $NH_2$ | H | H | (3) | $COOC_6H_4(4')COOC_5H_{11}$ | | 0,78 | 0,78 | |
| 495 | $NH_2$ | H | H | (3) | $COOC_6H_4(4')C_6H_5$ | | 0,80 | 0,80 | 0,79 |
| 496 | $NH_2$ | H | H | (3) | $OCH_3$ | | 0,70 | | |
| 497 | $NH_2$ | H | H | (3) | $OC_4H_9$ | | 0,72 | 0,72 | 0,71 |
| 498 | $NH_2$ | H | H | (3) | $OCH_2C_6H_5$ | | 0,72 | 0,72 | 0,71 |
| 499 | $NH_2$ | H | H | (3) | $O(CH_2)_2C_6H_5$ | | 0,74 | 0,74 | 0,72 |
| 500 | $NH_2$ | H | H | (3) | $OC_6H_5$ | 0,74 | 0,77 | 0,77 | 0,76 |
| 501 | $NH_2$ | H | H | (3) | $OC_6H_4(2')OC_2H_5$ | | 0,77 | | 0,76 |
| 502 | $NH_2$ | H | H | (3) | $OC_6H_4(2')Cl$ | 0,75 | | 0,77 | 0,76 |
| 503 | $NH_2$ | H | H | (3) | $OC_6H_4(3')CH_3$ | 0,75 | 0,77 | 0,77 | 0,76 |
| 504 | $NH_2$ | H | H | (3) | $OC_6H_4(3')Cl$ | 0,76 | 0,78 | 0,78 | 0,77 |
| 505 | $NH_2$ | H | H | (3) | $OC_6H_4(3')F$ | 0,75 | 0,77 | 0,77 | 0,76 |
| 506 | $NH_2$ | H | H | (3) | $OC_6H_4(4')CH_3$ | 0,75 | | 0,77 | 0,76 |
| 507 | $NH_2$ | H | H | (3) | $OC_6H_4(4')OCH_3$ | 0,75 | | 0,78 | 0,77 |
| 508 | $NH_2$ | H | H | (3) | $OC_6H_4(4')C_6H_5$ | | 0,79 | 0,78 | 0,77 |
| 509 | $NH_2$ | H | H | (3) | $OC_6H_4(4')SCH_3$ | | 0,77 | | |
| 510 | $NH_2$ | H | H | (3) | $OC_6H_4(4')COOC_2H_5$ | | | 0,77 | 0,76 |
| 511 | $NH_2$ | H | H | (3) | $OC_6H_4(4')COOC_5H_{11}$ | 0,74 | 0,77 | 0,76 | 0,75 |
| 512 | $NH_2$ | H | H | (3) | $OC_6H_4(4')Cl$ | 0,74 | 0,77 | 0,76 | |
| 513 | $NH_2$ | H | H | (3) | O 2-Naphthyl | | 0,78 | | 0,77 |
| 514 | $NH_2$ | H | H | (3) | $CF_3$ | | 0,73 | 0,74 | |

Tabelle 2 (Fortsetzung)

| | Y′ | Y″ | Y‴ | X | Q | $S_1$ | $S_2$ | $S_3$ | $S_4$ |
|---|---|---|---|---|---|---|---|---|---|
| 515 | $NH_2$ | H | H | (2) | $CH_3$ | | 0,70 | | |
| 516 | $NH_2$ | H | H | (2) | 2-Oxazolinyl | 0,74 | 0,76 | 0,76 | |
| 517 | $NH_2$ | H | H | (2) | $CONHC_6H_5$ | 0,74 | 0,77 | 0,76 | |
| 518 | $NH_2$ | H | H | (2) | $COOC_6H_5$ | 0,76 | 0,79 | | 0,77 |
| 519 | $NH_2$ | H | H | (2) | $COOC_6H_4(3')CH_3$ | | | 0,79 | |
| 520 | $NH_2$ | H | H | (2) | $COOC_6H_4(4')CH_3$ | | 0,79 | 0,79 | 0,78 |
| 521 | $NH_2$ | H | H | (2) | $COOC_6H_4(4')C_6H_5$ | 0,78 | 0,80 | | |
| 522 | $NH_2$ | H | H | (2) | $O(CH_2)_2C_6H_5$ | | 0,74 | 0,74 | 0,72 |
| 523 | $NH_2$ | H | H | (2) | $OC_6H_5$ | | 0,77 | 0,77 | 0,76 |
| 524 | $NH_2$ | H | H | (2) | $OC_6H_4(3')CH_3$ | | 0,77 | 0,77 | 0,76 |
| 525 | $NH_2$ | H | H | (2) | $OC_6H_4(3')F$ | 0,75 | | 0,77 | |
| 526 | $NH_2$ | H | H | (2) | $OC_6H_4(4')C_6H_5$ | | 0,79 | | 0,77 |
| 527 | $NH_2$ | H | H | (2) | $OC_6H_4(4')COOC_5H_{11}$ | 0,74 | 0,77 | 0,76 | 0,75 |
| 528 | H | H | $NH_2$ | (7) | 2-Oxazolinyl | | | 0,69 | |
| 529 | H | H | $NH_2$ | (7) | $COOC_3H_7$ | 0,61 | | 0,64 | |
| 530 | H | H | $NH_2$ | (7) | $COOC_5H_{11}$ | | | 0,66 | |
| 531 | H | H | $NH_2$ | (7) | $COOC_6H_5$ | 0,70 | 0,73 | 0,72 | |
| 532 | H | H | $NH_2$ | (7) | $COOC_6H_4(4')CH_3$ | 0,71 | | 0,73 | 0,72 |
| 533 | H | H | $NH_2$ | (7) | $OC_4H_9$ | | 0,65 | | |
| 534 | H | H | $NH_2$ | (2) | 2-Oxazolinyl | 0,67 | 0,70 | | |
| 535 | H | H | $NH_2$ | (2) | $CONHC_6H_5$ | | 0,70 | | |
| 536 | H | H | $NH_2$ | (2) | $COOC_6H_5$ | 0,70 | 0,73 | 0,72 | 0,71 |
| 537 | H | H | $NH_2$ | (2) | $COOC_6H_4(3')CH_3$ | 0,70 | 0,73 | 0,73 | 0,71 |
| 538 | H | H | $NH_2$ | (2) | $COOC_6H_4(4')COOC_5H_{11}$ | | 0,72 | 0,72 | 0,71 |
| 539 | H | H | $NH_2$ | (2) | CN | | 0,64 | | |
| 540 | H | $NH_2$ | H | (6) | $CH_3$ | 0,67 | 0,70 | | |
| 541 | H | $NH_2$ | H | (6) | $CH_2CH(CH_3)_2$ | | 0,76 | 0,76 | |
| 542 | H | $NH_2$ | H | (6) | 2-Oxazolinyl | | 0,76 | 0,76 | |
| 543 | H | $NH_2$ | H | (6) | $COOC_6H_5$ | 0,76 | 0,79 | 0,78 | 0,77 |
| 544 | H | $NH_2$ | H | (6) | $COOC_6H_4(4')C_6H_5$ | 0,78 | | 0,80 | 0,79 |
| 545 | H | $NH_2$ | H | (2) | $CH_3$ | | 0,70 | 0,70 | |
| 546 | H | $NH_2$ | H | (2) | $CH_2CH(CH_3)_2$ | | 0,76 | | |
| 547 | H | $NH_2$ | H | (2) | $COOC_5H_{11}$ | | 0,73 | 0,73 | |
| 548 | H | $NH_2$ | H | (2) | $COOC_6H_5$ | 0,76 | 0,79 | 0,78 | 0,77 |
| 549 | H | $NH_2$ | H | (2) | $COOC_6H_4(4')OCH_3$ | | 0,79 | 0,79 | |
| 550 | H | $NH_2$ | H | (2) | $COOC_6H_4(4')C_6H_5$ | 0,78 | 0,80 | | |
| 551 | H | $NH_2$ | H | (2) | $OCH_3$ | | 0,70 | | |
| 552 | $NH_2$ | H | H | (3) | $CONHCH_3$ | 0,69 | 0,75 | 0,76 | 0,73 |
| 553 | $NH_2$ | H | H | (3) | $CONHC_4H_9$ | 0,70 | 0,76 | 0,77 | 0,74 |
| 554 | $NH_2$ | H | H | (3) | $CONHC_5H_{11}$ | 0,71 | 0,76 | 0,77 | 0,75 |
| 555 | $NH_2$ | H | H | (3) | $CO–S–C_6H_5$ | 0,74 | | | |
| 556 | $NH_2$ | H | H | (3) | $CO–S–C_6H_4(4')CH_3$ | | | 0,76 | |
| 557 | $NH_2$ | H | H | (3) | $CO–S–C_6H_4(4')Cl$ | | 0,77 | | |
| 558 | $NH_2$ | H | H | (3) | $CO–S–C_6H_4(4')C(CH_3)_3$ | | | | 0,75 |
| 559 | SAr | H | H | (2) | $CONHC_5H_{11}$ | 0,73 | 0,78 | 0,77 | 0,76 |
| 560 | SAr | H | H | (2) | $CO–S–C_6H_4(4')CH_3$ | | | 0,77 | |
| 561 | $NH_2$ | H | H | (3) | $CH_2C_6H_5$ | 0,73 | 0,73 | | |
| 562 | $NH_2$ | H | H | (3) | $CH_2C_6H_4(4')CH_3$ | | 0,74 | 0,75 | |
| 563 | $NH_2$ | H | H | (3) | 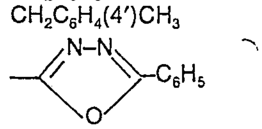 | 0,73 | | 0,75 | 0,74 |
| 564 | $NH_2$ | H | H | (3) | 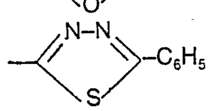 | 0,72 | | 0,75 | 0,73 |
| 565 | SAr | H | H | (2) | 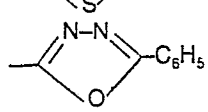 | 0,73 | 0,77 | | 0,75 |
| 566 | $NH_2$ | SAr | SAr | (3) | 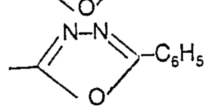 | 0,74 | 0,80 | | 0,77 |

Die folgende Tabelle 3 bezieht sich auf Farbstoffe der Formel

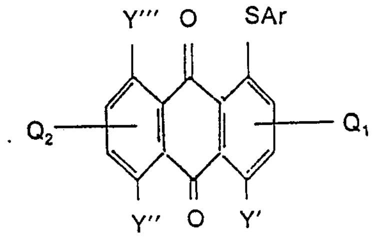

$X_1$ bezeichnet die Stellung des Substituenten $Q_1$ und $X_2$ die des Substituenten $Q_2$. Ansonsten gelten die zu Tabelle 2 gemachten Angaben.

Tabelle 3

| | Y′ | Y″ | Y‴ | $X_1$ | $Q_1$ | $X_2$ | $Q_2$ | $S_1$ | $S_2$ | $S_3$ | $S_4$ |
|---|---|---|---|---|---|---|---|---|---|---|---|
| 567 | H | SAr | H | (2) | $COOC_6H_5$ | (6) | $COOC_6H_5$ | 0,78 | 0,80 | 0,81 | 0,79 |
| 568 | H | SAr | H | (2) | $COOC_5H_{11}$ | (6) | $COOC_5H_{11}$ | 0,76 | 0,81 | 0,80 | 0,78 |
| 569 | H | H | SAr | (2) | $COOC_6H_4$(3′)F | (7) | $COOC_6H_4$(3′)F | 0,69 | 0,75 | 0,74 | 0,73 |
| 570 | H | H | SAr | (2) | $COOC_5H_{11}$ | (7) | $COOC_5H_{11}$ | 0,67 | 0,73 | 0,72 | 0,70 |
| 571 | $NH_2$ | SAr | $NH_2$ | (3) | $COOC_6H_5$ | (7) | $COOC_6H_5$ | 0,78 | 0,80 | 0,81 | 0,79 |
| 572 | $NH_2$ | SAr | $NH_2$ | (3) | $COOC_5H_{11}$ | (7) | $COOC_5H_{11}$ | 0,75 | | 0,79 | |
| 573 | $NH_2$ | $NH_2$ | SAr | (3) | $COOC_6H_5$ | (6) | $COOC_6H_5$ | 0,77 | 0,79 | | 0,76 |
| 574 | $NH_2$ | $NH_2$ | SAr | (3) | $COOC_5H_{11}$ | (6) | $COOC_5H_{11}$ | 0,75 | 0,77 | 0,78 | |

**Patentansprüche**

1. Anthrachinonfarbstoffe der Formel

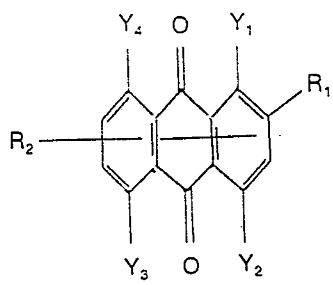

(I),

$R_1$ für –CO–X-Alkyl, –CO–X-Aralkyl, –CO–X-Aryl, O-Aryl, $-CF_3$ oder den Rest eines gegebenenfalls substituierten und/oder anellierten 5- oder 6-Ring-Heterocyclus der Oxazol-, Oxdiazol-, Thiazol-, Imidazol-, Triazol-, Oxazolin- oder Dihydro-H-oxazin-Reihe und

$R_2$ für H, Alkyl, Aralkyl, –CO–X-Alkyl, –CO–X-Aralkyl, –CO–X-Aryl, –CN, $-NO_2$, $-CF_3$, Halogen oder einen heterocyclischen Rest stehen,

X für O, S, NH oder eine direkte Bindung steht und

$Y_1$, $Y_2$, $Y_3$, $Y_4$ Wasserstoff, $-NH_2$, –OH, Halogen, $-NO_2$ oder eine Arylmercaptogruppe bezeichnen und mindestens einer der Substituenten $Y_1$ bis $Y_4$ für eine Arylmercaptogruppe steht, wobei weiterhin die für $R_1$, $R_2$ sowie $Y_1$ bis $Y_4$ genannten Alkyl-, Aryl-, Aralkyl- und heterocyclischen Reste substituiert und die Alkylketten durch 1 bis 3 nicht nachbarständige Sauerstoff-Atome unterbrochen sein können.

2. Anthrachinonfarbstoffe der Formel

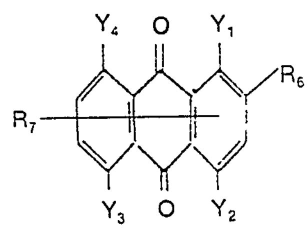

in der

$R_6$ Alkyl, Aralkyl, –CO–X-Alkyl, –CO–X-Aralkyl, –CO–X-Aryl, –O-Aryl, $-CF_3$ oder einen heterocyclischen Rest,

$R_7$ H, Alkyl, Aralkyl, –CO–X-Alkyl, –CO–X-Aralkyl, –CO–X-Aryl, –O-Aryl, –CN, $-NO_2$, $-CF_3$, Halogen oder einen heterocyclischen Rest bezeichnen,

X für O, S, NH oder eine direkte Bindung steht und

$Y_1$, $Y_2$, $Y_3$, $Y_4$ für folgende Viererkombinationen stehen:

| $Y_1$ | $Y_2$ | $Y_3$ | $Y_4$ |
|---|---|---|---|
| S–Ar | S–Ar | $NH_2$ | S–Ar |
| S–Ar | $NH_2$ | S–Ar | S–Ar |
| $NH_2$ | S–Ar | S–Ar | S–Ar |
| S–Ar | S–Ar | H | S–Ar |
| S–Ar | H | S–Ar | S–Ar |
| $NH_2$ | $NH_2$ | S–Ar | S–Ar |
| $NH_2$ | S–Ar | S–Ar | $NH_2$ |

| $Y_1$ | $Y_2$ | $Y_3$ | $Y_4$ |
|---|---|---|---|
| $NH_2$ | S–Ar | $NH_2$ | S–Ar |
| S–Ar | S–Ar | OH | $NH_2$ |
| $NH_2$ | OH | S–Ar | S–Ar |
| OH | $NH_2$ | S–Ar | S–Ar |
| $NH_2$ | S–Ar | OH | S–Ar |
| S–Ar | OH | S–Ar | $NH_2$ |
| OH | S–Ar | $NH_2$ | S–Ar |
| S–Ar | S–Ar | Hal | $NH_2$ |
| $NH_2$ | Hal | S–Ar | S–Ar |
| Hal | $NH_2$ | S–Ar | S–Ar |
| $NH_2$ | S–Ar | Hal | S–Ar |
| S–Ar | Hal | S–Ar | $NH_2$ |
| Hal | S–Ar | $NH_2$ | S–Ar |
| S–Ar | S–Ar | H | $NH_2$ |
| $NH_2$ | H | S–Ar | S–Ar |
| H | $NH_2$ | S–Ar | S–Ar |
| $NH_2$ | S–Ar | H | S–Ar |
| S–Ar | H | S–Ar | $NH_2$ |
| H | S–Ar | $NH_2$ | S–Ar |
| S–Ar | OH | S–Ar | Hal |
| OH | S–Ar | Hal | S–Ar |
| S–Ar | Hal | S–Ar | OH |
| S–Ar | S–Ar | H | OH |
| OH | H | S–Ar | S–Ar |
| OH | S–Ar | H | S–Ar |
| S–Ar | H | S–Ar | OH |
| H | S–Ar | OH | S–Ar |
| Hal | S–Ar | H | S–Ar |
| S–Ar | H | S–Ar | Hal |
| H | S–Ar | Hal | S–Ar |
| H | H | S–Ar | S–Ar |
| H | S–Ar | H | S–Ar |
| S–Ar | $NH_2$ | $NH_2$ | $NH_2$ |
| $NH_2$ | S–Ar | $NH_2$ | $NH_2$ |
| $NH_2$ | $NH_2$ | S–Ar | $NH_2$ |
| $NH_2$ | S–Ar | OH | $NH_2$ |
| $NH_2$ | OH | S–Ar | $NH_2$ |
| OH | $NH_2$ | $NH_2$ | S–Ar |
| S–Ar | OH | $NH_2$ | $NH_2$ |
| OH | S–Ar | $NH_2$ | $NH_2$ |
| $NH_2$ | $NH_2$ | S–Ar | OH |
| S–Ar | $NH_2$ | OH | $NH_2$ |
| $NH_2$ | S–Ar | $NH_2$ | OH |
| OH | $NH_2$ | S–Ar | $NH_2$ |
| S–Ar | $NH_2$ | $NO_2$ | $NH_2$ |
| $NH_2$ | S–Ar | $NH_2$ | $NO_2$ |
| $NO_2$ | $NH_2$ | S–Ar | $NH_2$ |
| $NH_2$ | S–Ar | H | $NH_2$ |
| $NH_2$ | H | S–Ar | $NH_2$ |
| H | $NH_2$ | $NH_2$ | S–Ar |
| S–Ar | H | $NH_2$ | $NH_2$ |
| H | S–Ar | $NH_2$ | $NH_2$ |
| $NH_2$ | $NH_2$ | S–Ar | H |
| S–Ar | $NH_2$ | H | $NH_2$ |
| $NH_2$ | S–Ar | $NH_2$ | H |
| H | $NH_2$ | S–Ar | $NH_2$ |
| S–Ar | $NH_2$ | H | H |
| H | H | $NH_2$ | S–A |
| S–Ar | H | $NH_2$ | H |
| H | S–Ar | H | $NH_2$ |
| $NH_2$ | H | S–Ar | H |

3. Anthrachinonfarbstoffe der Formeln

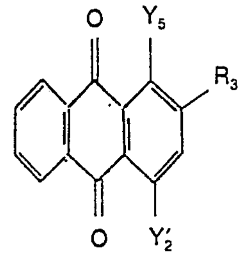

(II)

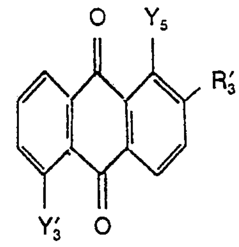

(V)

und

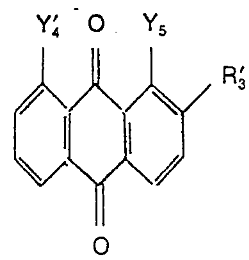

(VI)

in denen

$R_3$ 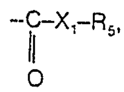 , $-OR_4$, $-SR_4$,

$R_3'$ 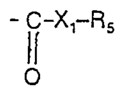

$Y_2'$, $Y_3'$, $Y_4'$ gegebenenfalls substituiertes Arylmercapto

$Y_5$ $-NH_2$, $-OH$ oder gegebenenfalls substituiertes Arylmercapto,

$R_4$, $R_5$ gegebenenfalls substituiertes Alkyl, das in der C-Kette durch ein oder mehrere O- und/oder S-Atome unterbrochen sein kann, gegebenenfalls substituiertes Aryl und

$X_1$ O, S oder NH bezeichnen.

4. Anthrachinonfarbstoffe gemäß Anspruch 3 der Formeln

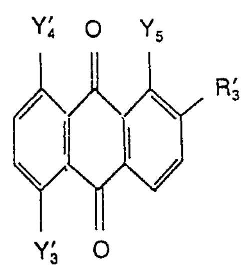

(IV)

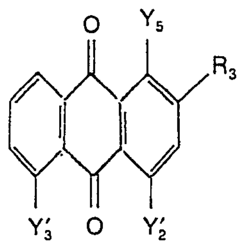

(VII)

und

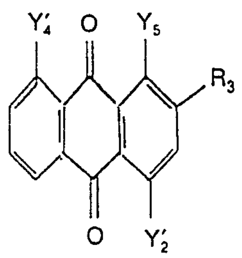

(VIII)

5. Anthrachinonfarbstoffe gemäß Anspruch 3 der Formel

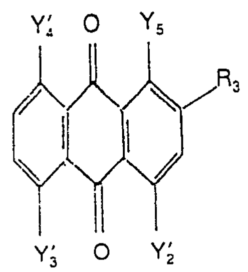

(III)

6. Anthrachinonfarbstoffe gemäß Anspruch 3 der Formeln

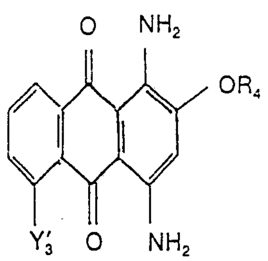

(IX)

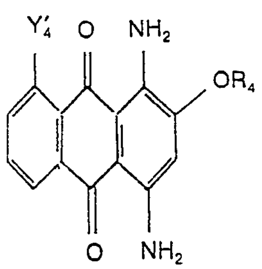

(X)

und

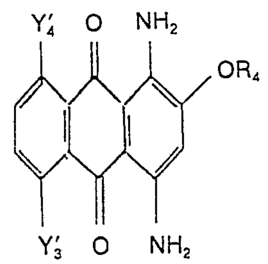

(XI)

7. Anthrachinonfarbstoffe der Formeln

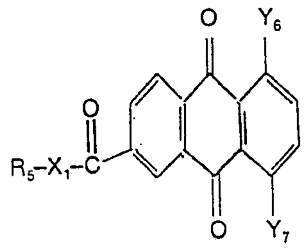

(XII)

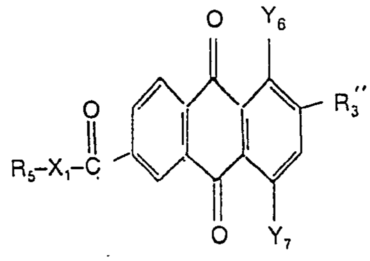

(XIII)

und

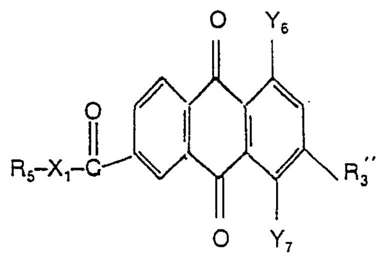

(XIV)

in denen

$X_1$ O, S, NH,

$R_3''$ $-OR_4$, $-SR_4$,

$R_4$, $R_5$ gegebenenfalls substituiertes Alkyl, das in der C-Kette durch ein oder mehrere O- und/oder S-Atome unterbrochen sein kann, gegebenenfalls substituiertes Aryl,

$Y_4'$ gegebenenfalls substituiertes Arylmercapto und

$Y_6$, $Y_7$ $-NH_2$, $-OH$, $-SR_4$, wobei einer der beiden Reste $Y_6$, $Y_7$ gegebenenfalls substituiertes Arylmercapto sein muß, bezeichnen.

8. Dichroitisches Material enthaltend mindestens einen Farbstoff gemäß den Ansprüchen 1–7.

9. Dichroitisches Material enthaltend mindestens einen Farbstoff der Formel

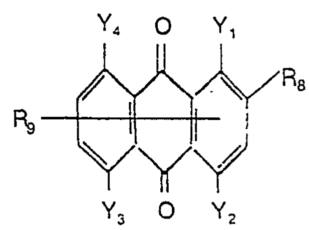

in der

$R_8$ –CO–X-Alkyl, –CO–X-Aralkyl, –CO–X-Aryl, –O-Alkyl, –O-Aralkyl, –O-Aryl, $-CF_3$ oder einen heterocyclischen Rest,

$R_9$ H oder $R_8$ und

X O, S, NH oder eine direkte Bindung

bezeichnen und

$Y_1$, $Y_2$, $Y_3$, $Y_5$ für folgende Viererkombinationen stehen:

| $Y_1$ | $Y_2$ | $Y_3$ | $Y_4$ |
|---|---|---|---|
| S–Ar | S–Ar | $NH_2$ | S–Ar |
| S–Ar | $NH_2$ | S–Ar | S–Ar |
| $NH_2$ | S–Ar | S–Ar | S–Ar |
| S–Ar | S–Ar | H | S–Ar |
| S–Ar | H | S–Ar | S–Ar |
| $NH_2$ | $NH_2$ | S–Ar | S–Ar |
| $NH_2$ | S–Ar | S–Ar | $NH_2$ |
| $NH_2$ | S–Ar | $NH_2$ | S–Ar |
| S–Ar | S–Ar | OH | $NH_2$ |
| $NH_2$ | OH | S–Ar | S–Ar |
| OH | $NH_2$ | S–Ar | S–Ar |
| $NH_2$ | S–Ar | OH | S–Ar |
| S–Ar | OH | S–Ar | $NH_2$ |
| OH | S–Ar | $NH_2$ | S–Ar |
| S–Ar | S–Ar | Hal | $NH_2$ |
| $NH_2$ | Hal | S–Ar | S–Ar |
| Hal | $NH_2$ | S–Ar | S–Ar |
| $NH_2$ | S–Ar | Hal | S–Ar |
| S–Ar | Hal | S–Ar | $NH_2$ |
| Hal | S–Ar | $NH_2$ | S–Ar |
| S–Ar | S–Ar | H | $NH_2$ |
| $NH_2$ | H | S–Ar | S–Ar |
| H | $NH_2$ | S–Ar | S–Ar |
| $NH_2$ | S–Ar | H | S–Ar |
| S–Ar | H | S–Ar | $NH_2$ |
| H | S–Ar | $NH_2$ | S–Ar |
| S–Ar | OH | S–Ar | Hal |
| OH | S–Ar | Hal | S–Ar |
| S–Ar | Hal | S–Ar | OH |
| S–Ar | S–Ar | H | OH |
| OH | H | S–Ar | S–Ar |
| OH | S–Ar | H | S–Ar |
| S–Ar | H | S–Ar | OH |
| H | S–Ar | OH | S–Ar |
| Hal | S–Ar | H | S–Ar |
| S–Ar | H | S–Ar | Hal |
| H | S–Ar | Hal | S–Ar |
| H | H | S–Ar | S–Ar |
| H | S–Ar | H | S–Ar |
| S–Ar | $NH_2$ | $NH_2$ | $NH_2$ |
| $NH_2$ | S–Ar | $NH_2$ | $NH_2$ |
| $NH_2$ | $NH_2$ | S–Ar | $NH_2$ |
| $NH_2$ | S–Ar | OH | $NH_2$ |
| $NH_2$ | OH | S–Ar | $NH_2$ |
| OH | $NH_2$ | $NH_2$ | S–Ar |
| S–Ar | OH | $NH_2$ | $NH_2$ |
| OH | S–Ar | $NH_2$ | $NH_2$ |
| $NH_2$ | $NH_2$ | S–Ar | OH |
| S–Ar | $NH_2$ | OH | $NH_2$ |
| $NH_2$ | S–Ar | $NH_2$ | OH |
| OH | $NH_2$ | S–Ar | $NH_2$ |
| S–Ar | $NH_2$ | $NO_2$ | $NH_2$ |
| $NH_2$ | S–Ar | $NH_2$ | $NO_2$ |
| $NO_2$ | $NH_2$ | S–Ar | $NH_2$ |
| $NH_2$ | S–Ar | H | $NH_2$ |
| $NH_2$ | H | S–Ar | $NH_2$ |
| H | $NH_2$ | $NH_2$ | S–Ar |
| S–Ar | H | $NH_2$ | $NH_2$ |
| H | S–Ar | $NH_2$ | $NH_2$ |
| $NH_2$ | $NH_2$ | S–Ar | H |
| S–Ar | $NH_2$ | H | $NH_2$ |
| $NH_2$ | S–Ar | $NH_2$ | H |
| H | $NH_2$ | S–Ar | $NH_2$ |
| S–Ar | $NH_2$ | H | H |
| H | H | $NH_2$ | S–A |
| S–Ar | H | $NH_2$ | H |
| H | S–Ar | H | $NH_2$ |
| $NH_2$ | H | S–Ar | H |

wobei Ar Aryl und Hal Halogen bezeichnen.

10. Dichroitisches Material gemäß den Ansprüche 8 und 9 enthaltend etwa 0,01 bis etwa 30 Gew.-%, vorzugsweise etwa 0,1 bis etwa 10 Gew.-%, Farbstoff.

## Claims

1. Anthraquinone dyestuffs of the formula

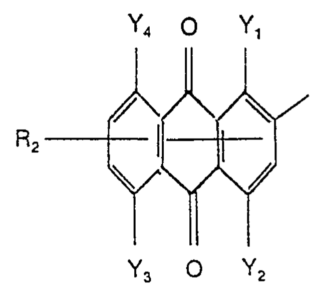

(I),

$R_1$ represents –CO–X-alkyl, –CO–X-aralkyl, –CO–X-aryl, O-aryl, $-CF_3$ or the radical of an optionally substituted and/or fused 5- or 6-ring heterocyclic compound from the oxazole, oxdiazole, thiazole, imidazole, triazole, oxazoline or dihydro-H-oxazine series and

$R_2$ represents H, alkyl, aralkyl, –CO–X-alkyl, –CO–X-aralkyl, –CO–X-aryl, –CN, $-NO_2$, $-CF_3$, halogen or a heterocyclic radical,

X represents O, S, NH or a direct bond and

$Y_1$, $Y_2$, $Y_3$ and $Y_4$ denote hydrogen, $-NH_2$, –OH, halogen, $-NO_2$ or an arylmercapto group and at least one of the substituents $Y_1$ to $Y_4$ represents an arylmercapto group, it being also possible for the alkyl, aryl, aralkyl and heterocyclic radicals mentioned for $R_1$, $R_2$ and $Y_1$ to $Y_4$ to be substituted and for the alkyl chains to be interrupted by 1 to 3 non-adjacent oxygen atoms.

2. Anthraquinone dyestuffs of the formula

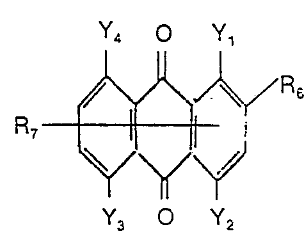

in which

$R_6$ denotes alkyl, aralkyl, –CO–X-alkyl, –CO–X-aralkyl, –CO–X-aryl, –O-aryl, $–CF_3$ or a heterocyclic radical,

$R_7$ denotes H, alkyl, aralkyl, –CO–X-alkyl, –CO–X-aralkyl, –CO–X-aryl, –O-aryl, –CN, $–NO_2$, $–CF_3$, halogen or a heterocyclic radical,

X represents O, S, NH or a direct bond and

$Y_1$, $Y_2$, $Y_3$ and $Y_4$ represent the following combinations of four:

| $Y_1$ | $Y_2$ | $Y_3$ | $Y_4$ |
|---|---|---|---|
| S–Ar | S–Ar | $NH_2$ | S–Ar |
| S–Ar | $NH_2$ | S–Ar | S–Ar |
| $NH_2$ | S–Ar | S–Ar | S–Ar |
| S–Ar | S–Ar | H | S–Ar |
| S–Ar | H | S–Ar | S–Ar |
| $NH_2$ | $NH_2$ | S–Ar | S–Ar |
| $NH_2$ | S–Ar | S–Ar | $NH_2$ |
| $NH_2$ | S–Ar | $NH_2$ | S–Ar |
| S–Ar | S–Ar | OH | $NH_2$ |
| $NH_2$ | OH | S–Ar | S–Ar |
| OH | $NH_2$ | S–Ar | S–Ar |
| $NH_2$ | S–Ar | OH | S–Ar |
| S–Ar | OH | S–Ar | $NH_2$ |
| OH | S–Ar | $NH_2$ | S–Ar |
| S–Ar | S–Ar | Hal | $NH_2$ |
| $NH_2$ | Hal | S–Ar | S–Ar |
| Hal | $NH_2$ | S–Ar | S–Ar |
| $NH_2$ | S–Ar | Hal | S–Ar |
| S–Ar | Hal | S–Ar | $NH_2$ |
| Hal | S–Ar | $NH_2$ | S–Ar |
| S–Ar | S–Ar | H | $NH_2$ |
| $NH_2$ | H | S–Ar | S–Ar |
| H | $NH_2$ | S–Ar | S–Ar |
| $NH_2$ | S–Ar | H | S–Ar |
| S–Ar | H | S–Ar | $NH_2$ |
| H | S–Ar | $NH_2$ | S–Ar |
| S–Ar | OH | S–Ar | Hal |
| OH | S–Ar | Hal | S–Ar |
| S–Ar | Hal | S–Ar | OH |
| S–Ar | S–Ar | H | OH |
| OH | H | S–Ar | S–Ar |
| OH | S–Ar | H | S–Ar |
| S–Ar | H | S–Ar | OH |
| H | S–Ar | OH | S–Ar |
| Hal | S–Ar | H | S–Ar |
| S–Ar | H | S–Ar | Hal |
| H | S–Ar | Hal | S–Ar |
| H | H | S–Ar | S–Ar |
| H | S–Ar | H | S–Ar |
| S–Ar | $NH_2$ | $NH_2$ | $NH_2$ |
| $NH_2$ | S–Ar | $NH_2$ | $NH_2$ |
| $NH_2$ | $NH_2$ | S–Ar | $NH_2$ |
| $NH_2$ | S–Ar | OH | $NH_2$ |
| $NH_2$ | OH | S–Ar | $NH_2$ |
| OH | $NH_2$ | $NH_2$ | S–Ar |
| S–Ar | OH | $NH_2$ | $NH_2$ |
| OH | S–Ar | $NH_2$ | $NH_2$ |
| $NH_2$ | $NH_2$ | S–Ar | OH |
| S–Ar | $NH_2$ | OH | $NH_2$ |
| $NH_2$ | S–Ar | $NH_2$ | OH |
| OH | $NH_2$ | S–Ar | $NH_2$ |

| $Y_1$ | $Y_2$ | $Y_3$ | $Y_4$ |
|---|---|---|---|
| S–Ar | $NH_2$ | $NO_2$ | $NH_2$ |
| $NH_2$ | S–Ar | $NH_2$ | $NO_2$ |
| $NO_2$ | $NH_2$ | S–Ar | $NH_2$ |
| $NH_2$ | S–Ar | H | $NH_2$ |
| $NH_2$ | H | S–Ar | $NH_2$ |
| H | $NH_2$ | $NH_2$ | S–Ar |
| S–Ar | H | $NH_2$ | $NH_2$ |
| H | S–Ar | $NH_2$ | $NH_2$ |
| $NH_2$ | $NH_2$ | S–Ar | H |
| S–Ar | $NH_2$ | H | $NH_2$ |
| $NH_2$ | S–Ar | $NH_2$ | H |
| H | $NH_2$ | S–Ar | $NH_2$ |
| S–Ar | $NH_2$ | H | H |
| H | H | $NH_2$ | S–A |
| S–Ar | H | $NH_2$ | H |
| H | S–Ar | H | $NH_2$ |
| $NH_2$ | H | S–Ar | H |

3. Anthraquinone dyestuffs of the formulae

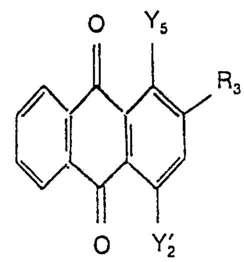

(II)

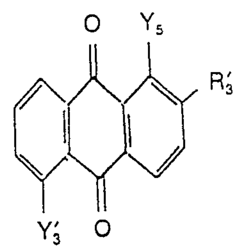

(V)

and

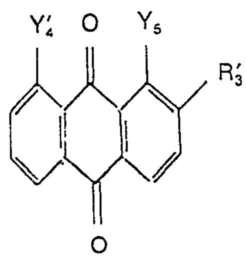

(VI)

in which

$R_3$ denotes 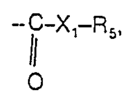, $–OR_4$, $–SR_4$,

$R_3'$ denotes 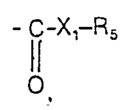

$Y_2'$, $Y_3'$ and $Y_4'$ denote optionally substituted arylmercapto,

$Y_5$ denotes $-NH_2$, $-OH$ or optionally substituted arylmercapto,

$R_4$ and $R_5$ denote optionally substituted alkyl which can be interrupted in the C chain by one or more O and/or S atoms, or denote optionally substituted aryl and

$X_1$ denotes O, S or NH.

4. Anthraquinone dyestuffs according to Claim 3 of the formulae

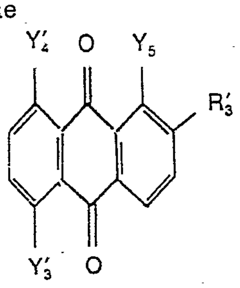

(IV)

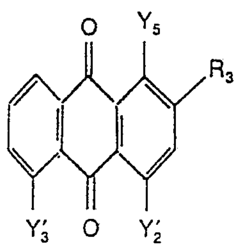

(VII)

and

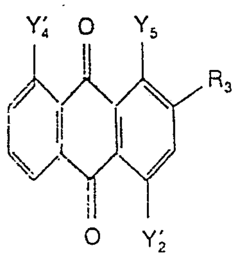

(VIII)

5. Anthraquinone dyestuffs according to Claim 3 of the formula

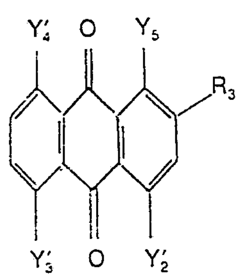

(III)

6. Anthraquinone dyes according to Claim 3 of the formulae

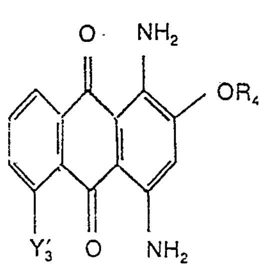

(IX)

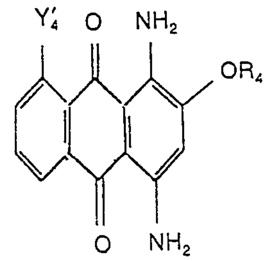

(X)

and

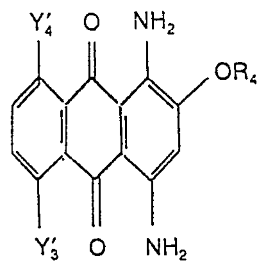

(XI)

7. Anthraquinone dyestuffs of the formulae

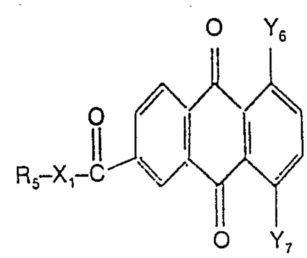

(XII)

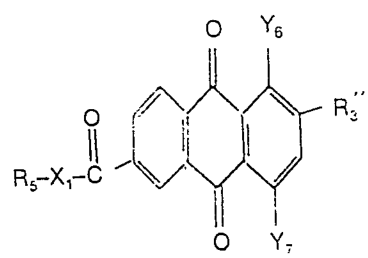

(XIII)

and

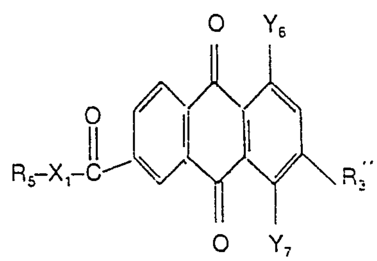

(XIV)

in which

$X_1$ denotes O, S, NH,

$R_3''$ denotes $-OR_4$, $-SR_4$,

$R_4$ and $R_5$ denote optionally substituted alkyl which can be interrupted in the C chain by one or more O and/or S atoms, or denote optionally substituted aryl,

$X_4'$ denotes optionally substituted arylmercapto and

$Y_6$ and $Y_7$ denote $-NH_2$, $-OH$, $-SR_4$, it being necessary for one of the two radicals $Y_6$ and $Y_7$ to be optionally substituted arylmercapto.

8. Dichroic material containing at least one dyestuff according to Claims 1–7.

9. Dichroic material containing at least one dyestuff of the formula

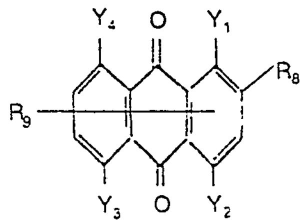

in which

$R_6$ denotes –CO–X-alkyl, –CO–X-aralkyl, –CO–X-aryl, –O-alkyl, –O-aralkyl, –O-aryl, $-CF_3$ or a heterocyclic radical,

$R_9$ denotes H or $R_8$ and

X denotes O, S, NH or a direct bond

and

$Y_1$, $Y_2$, $Y_3$ and $Y_5$ represent the following combinations of four:

| $Y_1$ | $Y_2$ | $Y_3$ | $Y_4$ |
|---|---|---|---|
| S–Ar | S–Ar | $NH_2$ | S–Ar |
| S–Ar | $NH_2$ | S–Ar | S–Ar |
| $NH_2$ | S–Ar | S–Ar | S–Ar |
| S–Ar | S–Ar | H | S–Ar |
| S–Ar | H | S–Ar | S–Ar |
| $NH_2$ | $NH_2$ | S–Ar | S–Ar |
| $NH_2$ | S–Ar | S–Ar | $NH_2$ |
| $NH_2$ | S–Ar | $NH_2$ | S–Ar |
| S–Ar | S–Ar | OH | $NH_2$ |
| $NH_2$ | OH | S–Ar | S–Ar |
| OH | $NH_2$ | S–Ar | S–Ar |
| $NH_2$ | S–Ar | OH | S–Ar |
| S–Ar | OH | S–Ar | $NH_2$ |
| OH | S–Ar | $NH_2$ | S–Ar |
| S–Ar | S–Ar | Hal | $NH_2$ |
| $NH_2$ | Hal | S–Ar | S–Ar |
| Hal | $NH_2$ | S–Ar | S–Ar |
| $NH_2$ | S–Ar | Hal | S–Ar |
| S–Ar | Hal | S–Ar | $NH_2$ |
| Hal | S–Ar | $NH_2$ | S–Ar |
| S–Ar | S–Ar | H | $NH_2$ |
| $NH_2$ | H | S–Ar | S–Ar |
| H | $NH_2$ | S–Ar | S–Ar |
| $NH_2$ | S–Ar | H | S–Ar |
| S–Ar | H | S–Ar | $NH_2$ |
| H | S–Ar | $NH_2$ | S–Ar |
| S–Ar | OH | S–Ar | Hal |
| OH | S–Ar | Hal | S–Ar |
| S–Ar | Hal | S–Ar | OH |
| S–Ar | S–Ar | H | OH |
| OH | H | S–Ar | S–Ar |
| OH | S–Ar | H | S–Ar |
| S–Ar | H | S–Ar | OH |
| H | S–Ar | OH | S–Ar |
| Hal | S–Ar | H | S–Ar |
| S–Ar | H | S–Ar | Hal |
| H | S–Ar | Hal | S–Ar |
| H | H | S–Ar | S–Ar |
| H | S–Ar | H | S–Ar |
| S–Ar | $NH_2$ | $NH_2$ | $NH_2$ |
| $NH_2$ | S–Ar | $NH_2$ | $NH_2$ |
| $NH_2$ | $NH_2$ | S–Ar | $NH_2$ |
| $NH_2$ | S–Ar | OH | $NH_2$ |
| $NH_2$ | OH | S–Ar | $NH_2$ |
| OH | $NH_2$ | $NH_2$ | S–Ar |
| S–Ar | OH | $NH_2$ | $NH_2$ |
| OH | S–Ar | $NH_2$ | $NH_2$ |
| $NH_2$ | $NH_2$ | S–Ar | OH |
| S–Ar | $NH_2$ | OH | $NH_2$ |
| $NH_2$ | S–Ar | $NH_2$ | OH |
| OH | $NH_2$ | S–Ar | $NH_2$ |
| S–Ar | $NH_2$ | $NO_2$ | $NH_2$ |
| $NH_2$ | S–Ar | $NH_2$ | $NO_2$ |
| $NO_2$ | $NH_2$ | S–Ar | $NH_2$ |
| $NH_2$ | S–Ar | H | $NH_2$ |
| $NH_2$ | H | S–Ar | $NH_2$ |
| H | $NH_2$ | $NH_2$ | S–Ar |
| S–Ar | H | $NH_2$ | $NH_2$ |
| H | S–Ar | $NH_2$ | $NH_2$ |
| $NH_2$ | $NH_2$ | S–Ar | H |
| S–Ar | $NH_2$ | H | $NH_2$ |
| $NH_2$ | S–Ar | $NH_2$ | H |
| H | $NH_2$ | S–Ar | $NH_2$ |
| S–Ar | $NH_2$ | H | H |
| $NH_2$ | S–Ar | H | H |
| H | H | $NH_2$ | S–Ar |
| S–Ar | H | $NH_2$ | H |
| H | S–Ar | H | $NH_2$ |
| $NH_2$ | H | S–Ar | H |

Ar denoting aryl and Hal denoting halogen.

10. Dichroic material according to Claims 8 and 9 containing about 0.01 to about 30% by weight, preferably about 0.1 to about 10% by weight, of dyestuff.

## Revendications

1. Colorants anthraquinoniques de formule

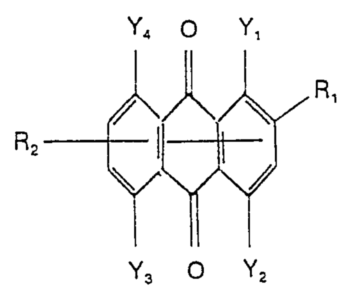

(I),

dans laquelle

$R_1$ représente un reste –CO–X-alkyle, –CO–X-arylalkyle, –CO–X-aryle, –O-aryle ou $-CF_3$ ou le reste d'un hétérocycle à 5 ou 6 chaînons éventuellement saturé et/ou condensé de la série de l'oxazole, de l'oxadiazole, du thiazole, de l'imidazole, du triazole, de l'oxazoline ou de la dihydro-H-oxazine et

$R_2$ représente H ou un reste alkyle, arylalkyle, –CO–X-alkyle, –CO–X-arylalkyle, –CO–X-aryle,

$-CN$, $-NO_2$, $-CF_3$, un halogène ou un reste hétérocyclique,

X représente O, S, NH ou une liaison directe et $Y_1$, $Y_2$, $Y_3$ et $Y_4$ représentent l'hydrogène, $-NH_2$, $-OH$, un halogène, $-NO_2$ ou un groupe arylmercapto et l'un au moins des substituants $Y_1$ à $Y_4$ représente un groupe arylmercapto, dans laquelle en outre les restes alkyles, aryles, aralkyles et hétérocycliques cités pour $R_1$, $R_2$ et $Y_1$ à $Y_4$ peuvent être substitués et les chaînes alkyles peuvent être interrompues par 1 à 3 atomes d'oxygène non voisins.

2. Colorants anthraquinoniques de formule

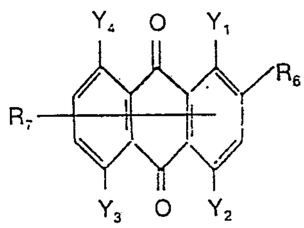

dans laquelle

$R_6$ représente un reste alkyle, arylalkyle, $-CO-X$-alkyle, $-CO-X$-arylalkyle, $-CO-X$-aryle, $-O$-aryle, $-CF_3$ ou un reste hétérocyclique,

$R_7$ représente H, un reste alkyle, arylalkyle, $-CO-X$-alkyle, $-CO-X$-arylalkyle, $-CO-X$-aryle, $-O$-aryle, $-CN$, $-NO_2$, $-CF_3$, un halogène ou un reste hétérocyclique,

X représente O, S, NH ou une liaison directe et $Y_1$, $Y_2$, $Y_3$ et $Y_4$ représentent les combinaisons suivantes de 4 substituants

| $Y_1$ | $Y_2$ | $Y_3$ | $Y_4$ |
|---|---|---|---|
| S–Ar | S–Ar | $NH_2$ | S–Ar |
| S–Ar | $NH_2$ | S–Ar | S–Ar |
| $NH_2$ | S–Ar | S–Ar | S–Ar |
| S–Ar | S–Ar | H | S–Ar |
| S–Ar | H | S–Ar | S–Ar |
| $NH_2$ | $NH_2$ | S–Ar | S–Ar |
| $NH_2$ | S–Ar | S–Ar | $NH_2$ |
| $NH_2$ | S–Ar | $NH_2$ | S–Ar |
| S–Ar | S–Ar | OH | $NH_2$ |
| $NH_2$ | OH | S–Ar | S–Ar |
| OH | $NH_2$ | S–Ar | S–Ar |
| $NH_2$ | S–Ar | OH | S–Ar |
| S–Ar | OH | S–Ar | $NH_2$ |
| OH | S–Ar | $NH_2$ | S–Ar |
| S–Ar | S–Ar | Hal | $NH_2$ |
| $NH_2$ | Hal | S–Ar | S–Ar |
| Hal | $NH_2$ | S–Ar | S–Ar |
| $NH_2$ | S–Ar | Hal | S–Ar |
| S–Ar | Hal | S–Ar | $NH_2$ |
| Hal | S–Ar | $NH_2$ | S–Ar |
| S–Ar | S–Ar | H | $NH_2$ |
| $NH_2$ | H | S–Ar | S–Ar |
| H | $NH_2$ | S–Ar | S–Ar |
| $NH_2$ | S–Ar | H | S–Ar |
| S–Ar | H | S–Ar | $NH_2$ |
| H | S–Ar | $NH_2$ | S–Ar |
| S–Ar | OH | S–Ar | Hal |
| OH | S–Ar | Hal | S–Ar |
| S–Ar | Hal | S–Ar | OH |
| S–Ar | S–Ar | H | OH |
| OH | H | S–Ar | S–Ar |
| OH | S–Ar | H | S–Ar |
| S–Ar | H | S–Ar | OH |
| H | S–Ar | OH | S–Ar |
| Hal | S–Ar | H | S–Ar |
| S–Ar | H | S–Ar | Hal |
| H | S–Ar | Hal | S–Ar |
| H | H | S–Ar | S–Ar |
| H | S–Ar | H | S–Ar |
| S–Ar | $NH_2$ | $NH_2$ | $NH_2$ |
| $NH_2$ | S–Ar | $NH_2$ | $NH_2$ |
| $NH_2$ | $NH_2$ | S–Ar | $NH_2$ |
| $NH_2$ | S–Ar | OH | $NH_2$ |
| $NH_2$ | OH | S–Ar | $NH_2$ |
| OH | $NH_2$ | $NH_2$ | S–Ar |
| S–Ar | OH | $NH_2$ | $NH_2$ |
| OH | S–Ar | $NH_2$ | $NH_2$ |
| $NH_2$ | $NH_2$ | S–Ar | OH |
| S–Ar | $NH_2$ | OH | $NH_2$ |
| $NH_2$ | S–Ar | $NH_2$ | OH |
| OH | $NH_2$ | S–Ar | $NH_2$ |
| S–Ar | $NH_2$ | $NO_2$ | $NH_2$ |
| $NH_2$ | S–Ar | $NH_2$ | $NO_2$ |
| $NO_2$ | $NH_2$ | S–Ar | $NH_2$ |
| $NH_2$ | S–Ar | H | $NH_2$ |
| $NH_2$ | H | S–Ar | $NH_2$ |
| H | $NH_2$ | $NH_2$ | S–Ar |
| S–Ar | H | $NH_2$ | $NH_2$ |
| H | S–Ar | $NH_2$ | $NH_2$ |
| $NH_2$ | $NH_2$ | S–Ar | H |
| S–Ar | $NH_2$ | H | $NH_2$ |
| $NH_2$ | S–Ar | $NH_2$ | H |
| H | $NH_2$ | S–Ar | $NH_2$ |
| S–Ar | $NH_2$ | H | H |
| $NH_2$ | S–Ar | H | H |
| H | H | $NH_2$ | S–Ar |
| S–Ar | H | $NH_2$ | H |
| H | S–Ar | H | $NH_2$ |
| $NH_2$ | H | S–Ar | H |

3. Colorants anthraquinoniques de formules

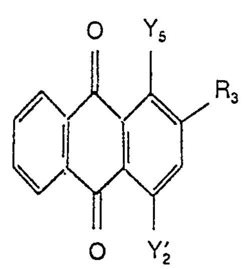

(II),

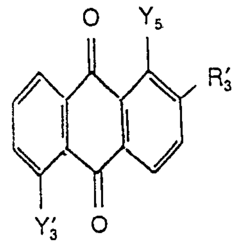

(V)

et

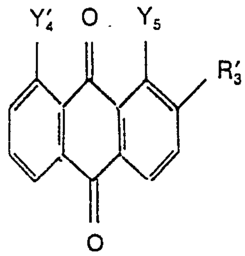

(VI)

dans lesquelles

$R_3$ représente $-\underset{\underset{O}{\|}}{C}-X_1-R_5$, $-OR_4$, $-SR_4$,

$R_3'$ représente $-\underset{\underset{O}{\|}}{C}-X_1-R_5$;

$Y_2'$, $Y_3'$, $Y_4'$ représentent un reste arylmercapto éventuellement substitué

$Y_5'$ représente $-NH_2$, $-OH$ ou un reste arylmercapto éventuellement substitué,

$R_4$ et $R_5$ représentent un reste alkyle éventuellement substitué, dont la chaîne carbonée peut être interrompue par un ou plusieurs atomes O et/ou S, un reste aryle éventuellement substitué et

$X_1$ représente O, S ou NH.

4. Colorants anthraquinoniques selon la revendication 3 de formules

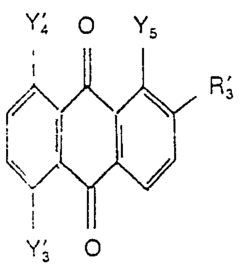

(IV),

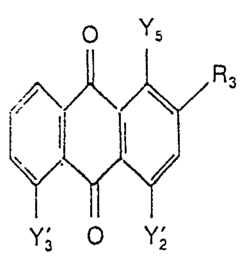

(VII)

et

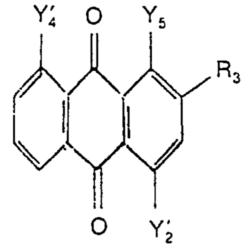

(VIII)

5. Colorants anthraquinoniques selon la revendication 3 de formule

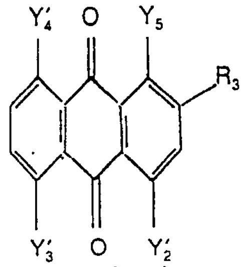

(III)

6. Colorants anthraquinoniques selon la revendication 3 de formules

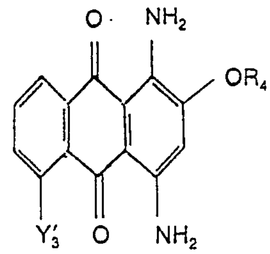

(IX)

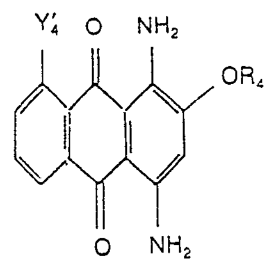

(X)

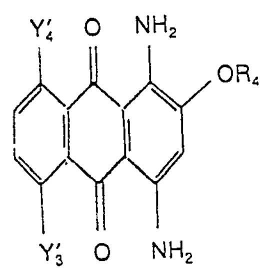

(XI)

7. Colorants anthraquinoniques de formules

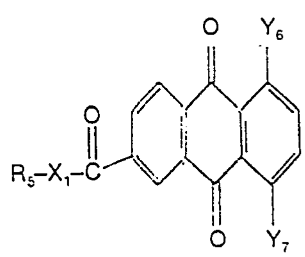

(XII)

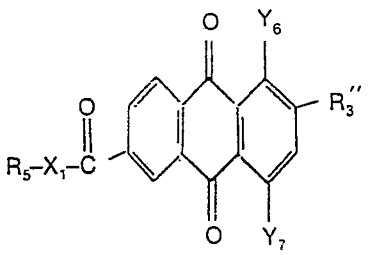

(XIII)

et

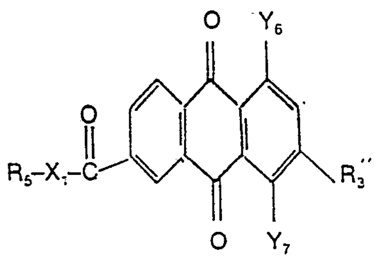

(XIV)

dans lesquelles

$X_1$ représente O, S, NH

$R_3''$ représente $-OR_4$, $-SR_4$

$R_4$ et $R_5$ représentent un reste alkyle éventuellement substitué, dont la chaîne carbonée peut être substituée par un ou plusieurs atomes O et/ou S, un reste aryle éventuellement substitué,

$Y_4'$ représente un reste arylmercapto éventuellement substitué et

$Y_6$ et $Y_7$ représentent $-NH_2$, $-OH$, $-SR_4$, l'un des deux restes $Y_6$ et

$Y_7$ devant être un reste arylmercapto éventuellement substitué.

8. Matériau dichroïque contenant au moins un colorant selon les revendications 1–7.

9. Matériau dichroïque contenant au moins un colorant de formule

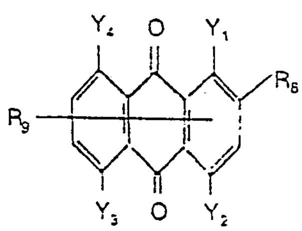

dans laquelle

$R_8$ représente un reste –CO–X-alkyle, –CO–X-arylalkyle, –CO–X-aryle, –O-alkyle, –O-arylalkyle, –O-aryle, $-CF_3$ ou un reste hétérocyclique,

$R_9$ représente H ou $R_8$,

X représente O, S, NH ou une liaison directe et

$Y_1$, $Y_2$, $Y_3$, $Y_5$ représentent les combinaisons suivantes de 4 substituants

| $Y_1$ | $Y_2$ | $Y_3$ | $Y_4$ |
|---|---|---|---|
| S–Ar | S–Ar | $NH_2$ | S–Ar |
| S–Ar | $NH_2$ | S–Ar | S–Ar |
| $NH_2$ | S–Ar | S–Ar | S–Ar |
| S–Ar | S–Ar | H | S–Ar |
| S–Ar | H | S–Ar | S–Ar |
| $NH_2$ | $NH_2$ | S–Ar | S–Ar |
| $NH_2$ | S–Ar | S–Ar | $NH_2$ |
| $NH_2$ | S–Ar | $NH_2$ | S–Ar |
| S–Ar | S–Ar | OH | $NH_2$ |
| $NH_2$ | OH | S–Ar | S–Ar |
| OH | $NH_2$ | S–Ar | S–Ar |
| $NH_2$ | S–Ar | OH | S–Ar |
| S–Ar | OH | S–Ar | $NH_2$ |
| OH | S–Ar | $NH_2$ | S–Ar |
| S–Ar | S–Ar | Hal | $NH_2$ |
| $NH_2$ | Hal | S–Ar | S–Ar |
| Hal | $NH_2$ | S–Ar | S–Ar |
| $NH_2$ | S–Ar | Hal | S–Ar |
| S–Ar | Hal | S–Ar | $NH_2$ |
| Hal | S–Ar | $NH_2$ | S–Ar |
| S–Ar | S–Ar | H | $NH_2$ |
| $NH_2$ | H | S–Ar | S–Ar |
| H | $NH_2$ | S–Ar | S–Ar |
| $NH_2$ | S–Ar | H | S–Ar |
| S–Ar | H | S–Ar | $NH_2$ |
| H | S–Ar | $NH_2$ | S–Ar |
| S–Ar | OH | S–Ar | Hal |
| OH | S–Ar | Hal | S–Ar |
| S–Ar | Hal | S–Ar | OH |
| S–Ar | S–Ar | H | OH |
| OH | H | S–Ar | S–Ar |
| OH | S–Ar | H | S–Ar |
| S–Ar | H | S–Ar | OH |
| H | S–Ar | OH | S–Ar |
| Hal | S–Ar | H | S–Ar |
| S–Ar | H | S–Ar | Hal |
| H | S–Ar | Hal | S–Ar |
| H | H | S–Ar | S–Ar |
| H | S–Ar | H | S–Ar |
| S–Ar | $NH_2$ | $NH_2$ | $NH_2$ |
| $NH_2$ | S–Ar | $NH_2$ | $NH_2$ |
| $NH_2$ | $NH_2$ | S–Ar | $NH_2$ |
| $NH_2$ | S–Ar | OH | $NH_2$ |
| $NH_2$ | OH | S–Ar | $NH_2$ |
| OH | $NH_2$ | $NH_2$ | S–Ar |
| S–Ar | OH | $NH_2$ | $NH_2$ |
| OH | S–Ar | $NH_2$ | $NH_2$ |
| $NH_2$ | $NH_2$ | S–Ar | OH |
| S–Ar | $NH_2$ | OH | $NH_2$ |
| $NH_2$ | S–Ar | $NH_2$ | OH |
| OH | $NH_2$ | S–Ar | $NH_2$ |
| S–Ar | $NH_2$ | $NO_2$ | $NH_2$ |
| $NH_2$ | S–Ar | $NH_2$ | $NO_2$ |
| $NO_2$ | $NH_2$ | S–Ar | $NH_2$ |
| $NH_2$ | S–Ar | H | $NH_2$ |
| $NH_2$ | H | S–Ar | $NH_2$ |
| H | $NH_2$ | $NH_2$ | S–Ar |
| S–Ar | H | $NH_2$ | $NH_2$ |
| H | S–Ar | $NH_2$ | $NH_2$ |
| $NH_2$ | $NH_2$ | S–Ar | H |
| S–Ar | $NH_2$ | H | $NH_2$ |
| $NH_2$ | S–Ar | $NH_2$ | H |
| H | $NH_2$ | S–Ar | $NH_2$ |
| S–Ar | $NH_2$ | H | H |
| $NH_2$ | S–Ar | H | H |
| H | H | $NH_2$ | S–Ar |
| S–Ar | H | $NH_2$ | H |

| $Y_1$ | $Y_2$ | $Y_3$ | $Y_4$ |
|---|---|---|---|
| H | S–Ar | H | $NH_2$ |
| $NH_2$ | H | S–Ar | H |

dans lesquelles Ar représente un reste aryle et Hal un halogène.

10. Matériau dichroïque selon les revendications 8 et 9 contenant environ 0,01 à environ 30% en poids de colorant, de préférence environ 0,1 à environ 10% en poids.